(19) Europäisches Patentamt
European Patent Office
Office européen des brevets

(11) **EP 4 408 070 A1**

(12) **EUROPEAN PATENT APPLICATION**
published in accordance with Art. 153(4) EPC

(43) Date of publication:
**31.07.2024 Bulletin 2024/31**

(21) Application number: **22882535.2**

(22) Date of filing: **20.09.2022**

(51) International Patent Classification (IPC):
**H04W 36/04** (2009.01)

(52) Cooperative Patent Classification (CPC):
**H04W 24/06; H04W 24/10; H04W 36/04**

(86) International application number:
**PCT/CN2022/119837**

(87) International publication number:
**WO 2023/065924 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.10.2021 CN 202111228800**

(71) Applicant: **Huawei Technologies Co., Ltd.**
**Shenzhen, Guangdong 518129 (CN)**

(72) Inventors:
• **ZHANG, Li**
**Shenzhen, Guangdong 518129 (CN)**
• **HAN, Jing**
**Shenzhen, Guangdong 518129 (CN)**
• **LI, Hong**
**Shenzhen, Guangdong 518129 (CN)**
• **SHEN, Zhongyi**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **MEASUREMENT METHOD, MEASUREMENT CONFIGURATION METHOD, AND RELATED COMMUNICATION APPARATUS**

(57) Embodiments of this application disclose a measurement method and a communication apparatus, which are used in a scenario of frequency or cell measurement related to a conditional event. First indication information is newly added to a measurement configuration received by a terminal device, and the first indication information indicates the terminal device to perform grouping based on whether an MO is a first-type MO (that is, an MO corresponding to conditional handover CHO and/or an MO corresponding to conditional PSCell addition/change CPAC), and determine a measurement parameter of each group. Therefore, the terminal device groups a plurality of MOs into a first group of MOs (including only the first-type MO) and a second group of MOs (excluding the first-type MO), correspondingly determines measurement parameters, and measures each group of MOs by using various measurement parameters. When the terminal device measures the plurality of MOs, the first group of MOs uses the measurement parameter of the first group of MOs, instead of sharing a same measurement parameter with another MO. This helps reduce impact posed on measurement of the first-type MO when the terminal device measures the plurality of MOs.

FIG. 1

**Description**

This application claims priority to Chinese Patent Application No. 202111228800.5, filed with the China National Intellectual Property Administration on October 21, 2021 and entitled "MEASUREMENT METHOD, MEASUREMENT CONFIGURATION METHOD, AND RELATED COMMUNICATION APPARATUS", which is incorporated herein by reference in its entirety.

**TECHNICAL FIELD**

Embodiments of this application relate to the communication field, and in particular, to a measurement method, a measurement configuration method, and a related communication apparatus.

**BACKGROUND**

Conditional handover (conditional handover, CHO), a handover manner proposed in a new radio (new radio, NR) system, is cell handover triggered based on a condition, aiming at improving robustness (Robustness) of a terminal device during cell handover. Specifically, a network device sends a conditional configuration of conditional handover CHO to the terminal device, where the conditional configuration of the conditional handover CHO includes an identifier of an applicable cell (applicable cell) of the CHO, a measurement identifier corresponding to the CHO, a measurement object (measurement object, MO) corresponding to the CHO that is determined by the terminal device by using the measurement identifier, and an event that needs to be met by the applicable cell of the CHO. Then, the terminal device measures, based on a measurement configuration, the MO corresponding to the CHO. If a result of measuring the applicable cell of the CHO by the terminal device meets the foregoing event, the terminal device triggers handover to the applicable cell of the CHO.

However, in actual application, MOs to be measured by a terminal device not only include an MO corresponding to CHO, but also may include an MO corresponding to common handover and another MO. Measurement duration for measuring a specific MO by the terminal device is related to a quantity of MOs to be measured by the terminal device. Generally, a larger quantity of MOs to be measured by the terminal device indicates longer measurement duration for measuring each of the plurality of MOs by the terminal device. Therefore, when a plurality of MOs need to be measured by the terminal device, measurement of an MO corresponding to the conditional handover CHO/an MO corresponding to conditional PSCell addition/change (conditional PSCell addition/change, CPAC) may be affected. Consequently, the conditional handover CHO or the conditional PSCell addition/change CPAC cannot be triggered in time based on a conditional event.

Therefore, how to define a measurement behavior and a measurement requirement of the terminal device to ensure that the terminal device can determine in time whether the conditional event of the CHO/CPAC is met needs to be further discussed.

**SUMMARY**

This application provides a measurement method, a measurement configuration method, and a related communication apparatus, to reduce impact posed on measurement of an MO corresponding to CHO/CPAC when a terminal device measures a plurality of MOs.

According to a first aspect, this application provides a measurement method. The measurement method relates to a terminal device and a network device, and may be used in scenarios such as conditional handover and cell reselection. Specifically, when the network device needs the terminal device to measure a frequency or a cell, the network device sends a measurement configuration to the terminal device. Correspondingly, the terminal device can receive the measurement configuration from the network device. The measurement configuration is used to configure a plurality of measurement objects MOs. The plurality of MOs include a first-type MO and a second-type MO, the first-type MO includes an MO corresponding to conditional handover CHO and/or an MO corresponding to conditional PSCell addition/change CPAC, and the second-type MO is an MO other than the first-type MO in the plurality of MOs. After the terminal device receives the measurement configuration, the terminal device determines whether the measurement configuration includes first indication information, where the first indication information indicates the terminal device to determine a measurement parameter based on a type of an MO. In other words, the first indication information indicates the terminal device to group the plurality of MOs based on whether an MO is the first-type MO, and determine a measurement parameter of each group. When the measurement configuration includes the first indication information, the terminal device groups the plurality of MOs based on a type of an MO (that is, groups the MOs based on whether an MO is the first-type MO), and then separately determines the measurement parameter of the first group of MOs and the measurement parameter of the second group of MOs. The first group of MOs includes only the first-type MO in the plurality of MOs, and the second group of MOs includes the second-type MO. Then, the terminal device separately measures the first group of MOs based on the measurement parameter of the first group of MOs, and measures the second group of MOs based on the measurement parameter of the second group of MOs.

In this application, the measurement configuration sent by the network device to the terminal device is not only used to configure the plurality of measurement objects MOs, but also may include the first indication information. The first indication information indicates the terminal device to perform grouping based on whether an MO is the first-type MO (including an MO corresponding to conditional handover CHO and/or an MO corresponding to conditional PSCell addition/change CPAC). After the terminal device receives the first indication information, the terminal device groups, based on whether an MO is the first-type MO, the plurality of MOs configured by the network device into the first group of MOs (including only the first-type MOs) and the second group of MOs (excluding the first-type MOs), and correspondingly determines measurement parameters. In a subsequent measurement process, the measurement parameter of the first group of MOs is used to measure the first group of MOs, and the measurement parameter of the second group of MOs is used to measure the second group of MOs. When measuring the plurality of MOs, the terminal device may determine, for the first group of MOs (that is, a group of MOs including only the first-type MOs), the measurement parameter for measuring the first group of MOs, instead of sharing a same measurement parameter with an MO of another type. This helps reduce impact posed on measurement of the first-type MO (that is, an MO corresponding to the CHO/CPAC) when the terminal device measures the plurality of MOs.

In a possible implementation, the measurement parameter of the first group of MOs is used to determine measurement duration for measuring any MO in the first group of MOs, and the measurement parameter of the second group of MOs is used to determine measurement duration for measuring any MO in the second group of MOs.

In this implementation, the measurement parameter of the first group of MOs is a parameter related to the measurement duration of each MO in the first group of MOs, and the measurement parameter of the second group of MOs is a parameter related to the measurement duration of each MO in the second group of MOs. Therefore, the terminal device may separately use different measurement parameters in the process of measuring the first group of MOs and the process of measuring the second group of MOs, to measure the first group of MOs and the second group of MOs by using different measurement duration. Therefore, the terminal device can control the measurement duration by controlling the measurement parameter.

In a possible implementation, the measurement parameter of the first group of MOs includes a first controlling factor, and the measurement parameter of the second group of MOs includes a second controlling factor. The first controlling factor is a multiplier used to calculate the measurement duration of the any MO in the first group of MOs, and the second controlling factor is a multiplier used to calculate the measurement duration of the any MO in the second group of MOs. In a possible implementation, the first controlling factor is used to reflect a degree (or proportion) of an increase in the measurement duration of each MO in the first group of MOs caused by a decrease in a measurement occasion of each MO in the first group of MOs because the terminal device measures the plurality of MOs; and the second controlling factor is used to reflect a degree (or proportion) of an increase in the measurement duration of each MO in the second group of MOs caused by a decrease in a measurement occasion of each MO in the second group of MOs because the terminal device measures the plurality of MOs.

In this implementation, the measurement parameter of the first group of MOs may be the first controlling factor, and the measurement parameter of the second group of MOs may be the second controlling factor. A product of the first controlling factor and initial measurement duration of one MO in the first group of MOs is the duration of the MO; and a product of the second controlling factor and initial measurement duration of one MO in the second group of MOs is the measurement duration of the MO. The initial measurement duration of an MO is duration when the terminal device needs to measure only the foregoing MO.

In a possible implementation, the first indication information in the measurement configuration includes a first scaling factor, a difference between 1 and the first scaling factor is a second scaling factor, the first scaling factor is used to calculate the first controlling factor, and the second scaling factor is used to calculate the second controlling factor.

For example, the first scaling factor is one of a plurality of scaling factors used to determine the first controlling factor. To be specific, a product of a reciprocal of the first scaling factor and another factor (for example, a factor that affects the measurement duration of each MO in the first group of MOs, for example, a quantity of MOs in the first group of MOs) is the first controlling factor. The second scaling factor is one of a plurality of scaling factors used to determine the second controlling factor. To be specific, a product of a reciprocal of the second scaling factor and another factor (for example, a factor that affects the measurement duration of each MO in the second group of MOs, for example, a quantity of MOs in the second group of MOs) is the second controlling factor.

In other words, when the network device indicates the terminal device to separately determine the measurement parameters of the plurality of MOs based on whether an MO is the first-type MO, the network device further indicates a parameter used for calculating the measurement parameter, that is, the first scaling factor. The terminal device may determine the second scaling factor based on the first scaling factor. For example, the terminal device may obtain the second scaling factor by calculating a difference between 1 and the first scaling factor. Then, the terminal device obtains the first controlling factor based on the product of the reciprocal of the first scaling factor and another factor, and obtains the second controlling factor based on the product of the reciprocal of the second scaling factor and another factor. In this implementation, the network device may indirectly control the measurement duration of each MO in the first group of MOs by controlling a value of the first scaling factor.

Optionally, the first scaling factor is used to determine a ratio of a quantity of measurement resources for measuring the first group of MOs to a quantity of measurement resources for measuring all MOs that are configured by the network device for the terminal device, and the first scaling factor is inversely correlated with measurement duration used for measuring one MO in the first group of MOs. The second scaling factor is used to determine a ratio of a quantity of measurement resources for measuring the second group of MOs to a quantity of measurement resources for measuring all MOs that are configured by the network device for the terminal device, and the second scaling factor is inversely correlated with measurement duration used for measuring one MO in the second group of MOs.

The measurement resource may be a measurement occasion (occasion), or may be a measurement unit (or a measurement link) used by the terminal device to measure the MO.

In a possible implementation, the measurement configuration further includes second indication information different from the first indication information, where the second indication information includes a first scaling factor, a difference between 1 and the first scaling factor is a second scaling factor, the first scaling factor is used to calculate the first controlling factor, and the second scaling factor is used to calculate the second controlling factor.

This implementation is similar to the foregoing implementation, and a difference lies only in that the first scaling factor is carried in a different message.

In a possible implementation, when the first group of MOs and the second group of MOs are MOs measured outside a measurement gap, in a process in which the terminal device determines the measurement parameter of the first group of MOs and the measurement parameter of the second group of MOs, the terminal device uses a third scaling factor as the scaling factor of the first group of MOs to calculate the first controlling factor and the second controlling factor.

In an implementation, the third scaling factor may be a preset scaling factor. To be specific, the network device and the terminal device agree on a scaling factor for calculating the measurement parameter of the first-type MO outside the measurement gap when grouping is performed based on whether an MO is the first-type MO. For example, a value of the preset third scaling factor may be 25%, 50%, or 75%, or certainly, may be another value. This is not specifically limited herein.

In another implementation, the third scaling factor is a scaling factor determined by the terminal device based on a quantity of first-type MOs and/or a total quantity of MOs configured by the terminal device. In other words, when the terminal device receives the measurement configuration, the terminal device can determine that the measurement configuration carries the first indication information, but the first indication information does not include content for calculating the measurement parameter of the first-type MO outside the measurement gap. In this case, the terminal device determines the third scaling factor based on the quantity of first-type MOs, or based on the quantity of first-type MOs and the total quantity of MOs configured by the terminal device.

For example, the terminal device may determine the third scaling factor only based on the quantity of first-type MOs. For example, when the quantity of first-type MOs is relatively small (for example, the quantity of first-type MOs is less than a first preset threshold), the terminal device determines that the third scaling factor is 50%; or when the quantity of first-type MOs is relatively large (for example, the quantity of first-type MOs is greater than a second preset threshold), the terminal device determines that the third scaling factor is 75%. The first preset threshold is less than the second preset threshold. It should be understood that the first preset threshold and the second preset threshold mentioned in this example may be empirical values, and may be adjusted based on an actual application scenario. Specifically, the first preset threshold and the second preset threshold in the foregoing example are not limited in this application.

For example, the terminal device may determine the third scaling factor based on the quantity of first-type MOs and the total quantity of MOs configured by the terminal device. For example, the terminal device may calculate a ratio of the quantity of first-type MOs to the total quantity of MOs configured by the terminal device. When the ratio is less than a third preset threshold, the terminal device determines that the third scaling factor is 50%; or when the ratio is greater than a third preset threshold, the terminal device determines that the third scaling factor is 75%. The third preset threshold is less than the third preset threshold. It should be understood that the third preset threshold and the fourth preset threshold mentioned in this example may be empirical values, and may be adjusted based on an actual application scenario. Specifically, the third preset threshold and the fourth preset threshold in the foregoing example are not limited in this application.

In a possible implementation, when the first group of MOs and the second group of MOs are MOs measured within a measurement gap, in a process in which the terminal device determines the measurement parameter of the first group of MOs and the measurement parameter of the second group of MOs, the terminal device uses a fourth scaling factor as the scaling factor of the first group of MOs to calculate the first controlling factor and the second controlling factor.

In an implementation, the fourth scaling factor may be a preset scaling factor. To be specific, the network device and the terminal device agree on a scaling factor for calculating the measurement parameter of the first-type MO within the measurement gap when grouping is performed based on whether an MO is the first-type MO.

In another implementation, the fourth scaling factor is a scaling factor determined by the terminal device based on a quantity of first-type MOs and/or a total quantity of MOs configured by the terminal device. In other words, when the terminal device receives the measurement configuration, the terminal device can determine that the measurement configuration carries the first indication information, but the first indication information does not include content for calculating the measurement parameter of the first-type MO within the measurement gap. In this case, the terminal device determines the fourth scaling factor based on the quantity of first-type MOs; or the terminal device determines the fourth scaling factor based on the quantity of first-type MOs and the total quantity of MOs configured by the terminal device.

For example, the terminal device may determine the fourth scaling factor only based on the quantity of first-type MOs. For example, when the quantity of first-type MOs is relatively small (for example, the quantity of first-type MOs is less than a fifth preset threshold), the terminal device determines that the fourth scaling factor is 50%; or when the quantity of first-type MOs is relatively large (for example, the quantity of first-type MOs is greater than a sixth preset threshold), the terminal device determines that the fourth scaling factor is 75%. The first preset threshold is less than the second preset threshold. It should be understood that the fifth preset threshold and the sixth preset threshold mentioned in this example may be empirical values, and may be adjusted based on an actual application scenario. Specifically, the fifth preset threshold and the sixth preset threshold in the foregoing example are not limited in this application.

For example, the terminal device may determine the fourth scaling factor based on the quantity of first-type MOs and the total quantity of MOs configured by the terminal device. For example, the terminal device may calculate a ratio of the quantity of first-type MOs to the total quantity of MOs configured by the terminal device. When the ratio is less than a seventh preset threshold, the terminal device determines that the fourth scaling factor is 50%; or when the ratio is greater than an eighth preset threshold, the terminal device determines that the fourth scaling factor is 75%. The third preset threshold is less than the third preset threshold. It should be understood that the seventh preset threshold and the eighth preset threshold mentioned in this example may be empirical values, and may be adjusted based on an actual application scenario. Specifically, the seventh preset threshold and the eighth preset threshold in the foregoing example are not limited in this application.

In another implementation, the fourth scaling factor is an existing configured scaling factor. The existing configured scaling factor is a scaling factor configured for the terminal device based on the conventional technology. In the conventional technology, the terminal device needs to determine a carrier-specific scaling factor (measurement gap sharing factor) for an MO that is measured within a measurement gap. The carrier-specific scaling factor may be a scaling factor used for determining a group in a conventional grouping manner. For example, the carrier-specific scaling factor may be a scaling factor used to determine a measurement parameter of an intra-frequency MO. However, in this implementation, the existing configured scaling factor (for example, the scaling factor used to determine the measurement parameter of the intra-frequency MO) is used as the scaling factor of the first group of MOs, to calculate the controlling factor of the first group of MOs.

In a possible implementation, when the first group of MOs and the second group of MOs are MOs measured outside a measurement gap, the terminal device determines the first controlling factor based on a quantity of MOs in the first group of MOs and at least one of an MO of a primary component carrier PCC and an MO of a primary secondary component carrier PSCC; and determines the second controlling factor based on a quantity of MOs in the second group of MOs.

Optionally, the first controlling factor is equal to a sum of the quantity of MOs of the primary component carrier PCC and the quantity of MOs in the first group of MOs. Generally, there is one MO of the primary component carrier PCC. For example, if the quantity of first-type MOs (excluding the MOs of the PCC) that are measured outside the measurement gap and that are configured by the network device is 3, the first controlling factor A1 = 1 (that is, the quantity of MOs of the PCC) + 3 (that is, the quantity of first-type MOs measured outside the measurement gap) = 4.

Optionally, the second controlling factor is equal to the quantity of MOs in the second group of MOs. For example, if the quantity of second-type MOs that are measured outside the measurement gap and that are configured by the network device is 4, the second controlling factor A2 = 4 (that is, the quantity of second-type MOs that are measured outside the measurement gap).

In the conventional technology, the terminal device does not group a plurality of MOs based on a type of an MO, to determine a measurement parameter. A controlling factor corresponding to an MO of a PCC is A = 1, a first group of MOs and a second group of MOs correspond to a same controlling factor, and the controlling factor is determined based on a quantity of MOs in the first group of MOs and a quantity of MOs in the second group of MOs, that is, A = 7. It can be learned that, in the manner in this embodiment, the controlling factor of the first group of MOs is decreased, that is, the measurement duration for measuring the first group of MOs by the terminal device is decreased.

It should be understood that, based on different content carried in the first indication information and different quantities of MOs of different types, the terminal device may adaptively select any one of the foregoing implementations to determine the measurement parameter of the first group of MOs and the measurement parameter of the second group of MOs.

In a possible implementation, the terminal device first determines, based on a measurement parameter, measurement duration of each MO in a group corresponding to the measurement parameter, and then measures each MO based on a parameter such as a measurement quantity in the measurement configuration.

Specifically, when the terminal device measures the first group of MOs based on the measurement parameter of the first group of MOs, the terminal device determines measurement duration of each MO in the first group of MOs based on the measurement parameter of the first group of MOs and initial measurement duration of each MO in the first group of MOs, and performs measurement based on the measurement duration of each MO in the first group of MOs. The initial measurement duration is duration that is predefined in a protocol and that is used when the terminal device measures only one MO.

Specifically, when the terminal device measures the second group of MOs based on the measurement parameter of the second group of MOs, the terminal device determines the measurement duration of each MO in the second group of MOs based on the measurement parameter of the second group of MOs and initial measurement duration of each MO in the second group of MOs, and performs measurement based on the measurement duration of each MO in the second group of MOs. The initial measurement duration is duration that is predefined in a protocol and that is used when the terminal device measures only one MO.

In this implementation, the terminal device may determine, by grouping, the measurement duration of each MO in each group of MOs, and then measure the MO based on the measurement duration corresponding to each MO, so that different measurement duration is used for the first-type MO and the second-type MO. When a value of the first scaling factor of the first-type MO is adjusted, measurement of the first-type MO can use more measurement occasions and occupy more measurement resources than measurement of the second-type MO. In this way, the terminal device can preferentially measure the first-type MO, to help shorten time for triggering the conditional handover CHO/conditional PSCell addition/change CPAC by the terminal device.

According to a second aspect, this application provides a measurement configuration method. The measurement configuration method is used in a network device. Specifically, the network device sends a measurement configuration to a terminal device, where the measurement configuration is used to configure a plurality of measurement objects MOs, the plurality of MOs include a first-type MO and a second-type MO, the measurement configuration includes first indication information, and the first indication information indicates the terminal device to determine a measurement parameter based on a type of an MO, so that the terminal device separately measures a first group of MOs based on a measurement parameter of the first group of MOs, and measures a second group of MOs based on a measurement parameter of the second group of MOs.

The first-type MO includes an MO corresponding to conditional handover CHO and/or an MO corresponding to conditional PSCell addition/change CPAC, and the second-type MO is an MO other than the first-type MO in the plurality of MOs. The first group of MOs includes only the first-type MO in the plurality of MOs, and the second group of MOs includes the second-type MO.

In this implementation, a new field or character (that is, the first indication information) is added to the measurement configuration configured by the network device for the terminal device, to indicate the terminal device to group, based on whether an MO is the first-type MO, the plurality of MOs configured by the network device, and separately determine the measurement parameter of each group, so that the terminal device measures each group of MOs based on the measurement parameter of each group. Because the first indication information is added to the measurement configuration sent by the network device to the terminal device, when measuring the plurality of MOs, the terminal device may determine, for the first group of MOs (that is, a group of MOs including only the first-type MOs), the measurement parameter for measuring the first group of MOs, instead of sharing a same measurement parameter with an MO of another type. This helps reduce impact posed on measurement of the first-type MO (that is, an MO corresponding to the CHO/CPAC) when the terminal device measures the plurality of MOs, and the network device may indirectly control allocation of measurement resources of the terminal device to the first-type MO and the second-type MO.

In a possible implementation, the measurement parameter of the first group of MOs is used to determine measurement duration for measuring any MO in the first group of MOs, and the measurement parameter of the second group of MOs is used to determine measurement duration for measuring any MO in the second group of MOs.

In a possible implementation, the measurement parameter of the first group of MOs includes a first controlling factor, and the measurement parameter of the second group of MOs includes a second controlling factor. The first controlling factor is a multiplier used to calculate the measurement duration of the any MO in the first group of MOs, and the second controlling factor is a multiplier used to calculate the measurement duration of the any MO in the second group of MOs.

In a possible implementation, the first indication information includes a first scaling factor, a difference between 1 and the first scaling factor is a second scaling factor, the first scaling factor is used to calculate the first controlling factor, and the second scaling factor is used to calculate the second controlling factor.

In a possible implementation, the measurement configuration further includes second indication information different from the first indication information, where the second indication information includes a first scaling factor, a difference between 1 and the first scaling factor is a second scaling factor, the first scaling factor is used to calculate the first controlling factor, and the second scaling factor is used to calculate the second controlling factor.

It should be noted that specific implementations and beneficial effects of this aspect are similar to some implementations of the first aspect. For details, refer to the specific implementations and beneficial effects of the first aspect. Details are not described herein again.

According to a third aspect, this application provides a measurement method. The measurement method relates to a terminal device and a network device, and may be used in scenarios such as conditional handover and cell reselection. Specifically, when the network device needs the terminal device to measure a frequency or a cell, the network device sends a measurement configuration to the terminal device. Correspondingly, the terminal device can receive the measurement configuration from the network device. The measurement configuration is used to configure a plurality of measurement objects MOs. The plurality of MOs include at least one first-type MO that operates on a same frequency as a serving cell, and the first-type MO includes an MO corresponding to conditional handover CHO and/or an MO corresponding to conditional PSCell addition/change CPAC. If an applicable cell corresponding to a conditional configuration in the first-type MO that operates on a same frequency as the serving cell is a neighboring cell, the terminal device measures the applicable cell corresponding to the conditional configuration in the first-type MO that operates on a same frequency as the serving cell.

The first-type MO that operates on a same frequency as the serving cell means that a frequency of a to-be-measured reference signal in the first-type MO is the same as a frequency of a to-be-measured reference signal of the serving cell in which the terminal device is located. Optionally, a frequency of the first-type MO is located in an FR2 frequency band.

After the terminal device receives the measurement configuration, to ensure that the terminal device can determine in time whether a conditional event of the first-type MO is met, the terminal device needs to determine whether an applicable cell corresponding to the conditional configuration in each first-type MO is a neighboring cell. In the conventional technology, the terminal device measures a neighboring cell in only one intra-frequency MO in one frequency band of FR2, and does not measure a neighboring cell in another MO (that is, measures only a serving cell in another MO). If there is a primary component carrier PCC/primary secondary component carrier PSCC in the foregoing frequency band, the terminal device measures all neighboring cells in an MO corresponding to the primary component carrier PCC/an MO corresponding to primary secondary component carrier PSCC; or if there is no primary component carrier PCC/primary secondary component carrier PSCC in the foregoing frequency band, the terminal device measures all neighboring cells in an MO corresponding to any secondary component carrier SCC. However, when the first-type MO is an intra-frequency MO corresponding to a secondary component carrier SCC, according to a measurement rule defined in the conventional technology, the terminal device does not necessarily measure a neighboring cell in the first-type MO that is used as the intra-frequency MO corresponding to the secondary component carrier SCC. Therefore, a conditional event of the applicable cell in the first-type MO cannot be triggered. However, in this embodiment, when the terminal device determines that the applicable cell corresponding to the conditional configuration in the first-type MO that operates on a same frequency as the serving cell is a neighboring cell, the terminal device measures the applicable cell corresponding to the conditional configuration in the first-type MO that operates on a same frequency as the serving cell. In other words, in this embodiment, a measurement behavior of the terminal device is modified. When the first-type MO is an FR2 intra-frequency MO, the terminal device certainly measures an applicable cell in the first-type MO, to ensure that the terminal can determine in time whether a conditional event of the first-type MO is met, and trigger conditional handover or conditional PSCell addition/change in time.

In a possible implementation, when a frequency band in which the first-type MO that operates on a same frequency as the serving cell is located does not include a primary component carrier PCC and a primary secondary component carrier PSCC, the method further includes: The terminal device measures all neighboring cells in one of the at least one first-type MO that operates on a same frequency as the serving cell.

In this implementation, when there is no primary component carrier PCC or primary secondary component carrier PSCC in the foregoing frequency band, the terminal device measures all neighboring cells in a first-type MO that operates on a same frequency as the serving cell, and measures an applicable cell serving as the neighboring cell in another first-type MO that operates on a same frequency as the serving cell.

In a possible implementation, when a frequency band in which the first-type MO that operates on a same frequency as the serving cell is located includes a primary component carrier PCC and/or a primary secondary component carrier PSCC, the method further includes: The terminal device measures all neighboring cells in an MO of the primary component carrier PCC and/or an MO of the primary secondary component carrier PSCC.

In this implementation, when there is a primary component carrier PCC and/or a primary secondary component carrier PSCC in the foregoing frequency band, the terminal device measures all neighboring cells in an MO corresponding to the primary component carrier PCC and/or an MO corresponding to the primary secondary component carrier PSCC. In addition, an extra measurement resource needs to be added to measure an applicable cell serving as a neighboring cell in a first-type MO that operates on a same frequency as the serving cell.

According to a fourth aspect, this application provides a measurement method. The measurement method relates to a terminal device and a network device, and may be used in scenarios such as conditional handover and cell reselection. Specifically, the terminal device receives a measurement configuration and a conditional configuration from the network device, where the measurement configuration is used to configure a plurality of measurement objects MOs, the plurality of MOs include a first-type MO, the first-type MO includes an MO corresponding to conditional handover CHO and/or an MO corresponding to conditional PSCell addition/change CPAC, and the conditional configuration is used to configure at least one conditional event for triggering conditional handover CHO and/or conditional PSCell addition/change CPAC. When the conditional event includes a time-based conditional event or a location-based conditional event, and an applicable cell corresponding to the conditional configuration meets the time-based conditional event or the location-based conditional event, the terminal device measures only a target MO in the first-type MO, where the target MO is an MO in the first-type MO including the applicable cell corresponding to the conditional configuration.

In this embodiment, the applicable cell configured with the time-based conditional event and the applicable cell configured with the location-based conditional event may need to be preferentially measured compared with an applicable cell configured with only a normal conditional event. Therefore, after the terminal device receives the measurement configuration and the conditional configuration, the terminal device determines whether the conditional event configured by the network device includes the time-based conditional event or the location-based conditional event. In other words, the terminal device needs to first determine whether the time-based conditional event or the location-based conditional event is configured for the applicable cell in the first-type MO. When the applicable cell in the first-type MO meets the time-based conditional event or location-based conditional event, the terminal device measures only an MO (for ease of description, referred to as a target MO below) in which the applicable cell that meets the foregoing time-based conditional event or location-based conditional event is located. This helps ensure measurement of the MO in which the cell for which the time-based conditional event is configured is located, and helps shorten triggering of the terminal device for conditional handover CHO and/or conditional PSCell addition/change CPAC.

In a possible implementation, the target MO is associated with a plurality of synchronization signal block measurement timing configuration SMTC windows. That the terminal device measures only a target MO in the first-type MO includes: The terminal device measures the target MO only in a first SMTC window, where the first SMTC window is an SMTC window in which the applicable cell corresponding to the conditional configuration is located.

In a possible implementation, the terminal device measures only the target MO in the first-type MO, and does not measure another first-type MO, and the terminal device measures the second-type MO based on the measurement configuration. In another possible implementation, the terminal device measures only the target MO in all the MOs, and does not measure another first-type MO and another second-type MO.

In a possible implementation, the first-type MO is an MO in a non-terrestrial network NTN. In this case, the target MO is also an NTN MO. In this case, the terminal device measures an MO, in the first-type MO in the NTN, of an applicable cell that meets a time-based conditional event or a location-based conditional event; and does not measure an MO of another type (for example, the second-type MO (including a second-type MO in the NTN and a second-type MO in a TN)), or an MO of an applicable cell that does not meet a time-based conditional event, or an MO of an applicable cell that does not meet a location-based conditional event.

In a possible implementation, the measurement configuration received by the terminal device from the network device includes an NTN MO and a TN MO, and the NTN MO includes the first-type MO and the second-type MO. The terminal device measures only the target MO in the NTN MO, and does not measure another first-type MO and another second-type MO. In addition, the terminal device measures the TN MO based on the measurement configuration.

The solution provided in this embodiment may be used in an NTN scenario. In the NTN scenario, the network device may determine, based on ephemeris information of a satellite, a specific geographical location covered by an NTN cell within a time range, and then the network device determines the foregoing conditional configuration (that is, a conditional configuration of a conditional event for triggering conditional handover CHO and/or conditional PSCell addition/change CPAC) based on the time range and the geographical location. When the time-based conditional event or the location-based conditional event is met, the terminal device is usually closer to an applicable cell corresponding to the foregoing conditional configuration. Therefore, in this embodiment, the terminal device preferentially ensures measurement of the MO in which the applicable cell corresponding to the conditional configuration is located, to quickly trigger conditional handover CHO and/or conditional PSCell addition/change CPAC.

Optionally, the terminal device may stop measuring another NTN cell, so that times for serving cell data interruption caused by measuring timing of different NTN neighboring cells can be reduced. In addition, when the time-based conditional event or the location-based conditional event is met, the terminal device usually does not perform measurement in coverage of another NTN cell. Therefore, stopping measurement on the another NTN cell generally does not pose negative impact on mobility.

According to a fifth aspect, this application provides a communication apparatus. The communication apparatus is a terminal device or a chip in a terminal device. The communication apparatus includes a transceiver module and a processing module.

The transceiver module is configured to receive a measurement configuration, where the measurement configuration is used to configure a plurality of measurement objects MOs, the plurality of MOs include a first-type MO and a second-type MO, the first-type MO includes an MO corresponding to conditional handover CHO and/or an MO corresponding to conditional PSCell addition/change CPAC, and the second-type MO is an MO other than the first-type MO in the plurality of MOs.

The processing module is configured to: parse and identify the measurement configuration, and when the measurement configuration includes first indication information, determine a measurement parameter of a first group of MOs and a measurement parameter of a second group of MOs, where the first group of MOs includes only the first-type MO in the plurality of MOs, the second group of MOs includes the second-type MO, and the first indication information indicates the terminal device to determine a measurement parameter based on a type of an MO.

The processing module is further configured to measure the first group of MOs based on the measurement parameter of the first group of MOs, and measure the second group of MOs based on the measurement parameter of the second group of MOs.

In a possible implementation, the measurement parameter of the first group of MOs is used to determine measurement duration for measuring any MO in the first group of MOs, and the measurement parameter of the second group of MOs is used to determine measurement duration for measuring any MO in the second group of MOs.

In a possible implementation, the measurement parameter of the first group of MOs includes a first controlling factor, and the measurement parameter of the second group of MOs includes a second controlling factor. The first controlling factor is a multiplier used to calculate the measurement duration of the any MO in the first group of MOs, and the second controlling factor is a multiplier used to calculate the measurement duration of the any MO in the second group of MOs.

In a possible implementation, the first indication information includes a first scaling factor, a difference between 1 and the first scaling factor is a second scaling factor, the first scaling factor is used to calculate the first controlling factor, and the second scaling factor is used to calculate the second controlling factor.

In a possible implementation, when the first group of MOs and the second group of MOs are MOs measured outside a measurement gap, the processing module is specifically configured to determine the first controlling factor and the second controlling factor based on a third scaling factor. The third scaling factor is a preset scaling factor, or the third scaling factor is a scaling factor determined by the terminal device based on a quantity of first-type MOs and a total quantity of MOs configured by the terminal device.

In a possible implementation, when the first group of MOs and the second group of MOs are MOs measured within a measurement gap, the processing module is specifically configured to determine the first controlling factor and the second controlling factor based on a fourth scaling factor, where the fourth scaling factor is an existing configured scaling factor, and the existing configured scaling factor is a scaling factor that is configured by a network device for the terminal device and that is used to determine a measurement parameter of an intra-frequency MO; or the fourth scaling factor is a preset scaling factor; or the fourth scaling factor is a scaling factor determined by the terminal device based on a quantity of first-type MOs and/or a total quantity of MOs configured by the terminal device.

In a possible implementation, when the first group of MOs and the second group of MOs are MOs measured outside a measurement gap, the processing module is specifically configured to:

determine the first controlling factor based on a quantity of MOs in the first group of MOs and at least one of an MO of a primary component carrier PCC and an MO of a primary secondary component carrier PSCC; and determine the second controlling factor based on a quantity of MOs in the second group of MOs.

In a possible implementation, the processing module is specifically configured to:

determine measurement duration of each MO in the first group of MOs based on the measurement parameter of the first group of MOs and initial measurement duration of each MO in the first group of MOs, and measure an MO corresponding to the measurement duration based on the measurement duration of each MO in the first group of MOs; and

determine the measurement duration of each MO in the second group of MOs based on the measurement parameter of the second group of MOs and initial measurement duration of each MO in the second group of MOs, and measure an MO corresponding to the measurement duration based on the measurement duration of each MO in the second group of MOs, where the initial measurement duration is duration that is predefined in a protocol and that is used when the terminal device measures only one MO.

It should be noted that specific implementations and beneficial effects of this aspect are similar to some implementations of the first aspect. For details, refer to the specific implementations and beneficial effects of the first aspect.

Details are not described herein again.

According to a sixth aspect, this application provides a communication apparatus. The communication apparatus is a network device or a chip in a network device. The communication apparatus includes: a transceiver module, configured to send a measurement configuration to a terminal device, where the measurement configuration is used to configure a plurality of measurement objects MOs, the plurality of MOs include a first-type MO and a second-type MO, the measurement configuration includes first indication information, and the first indication information indicates the terminal device to determine a measurement parameter based on a type of an MO, so that the terminal device separately measures a first group of MOs based on a measurement parameter of the first group of MOs, and measures a second group of MOs based on a measurement parameter of the second group of MOs.

The first-type MO includes an MO corresponding to conditional handover CHO and/or an MO corresponding to conditional PSCell addition/change CPAC, and the second-type MO is an MO other than the first-type MO in the plurality of MOs. The first group of MOs includes only the first-type MO in the plurality of MOs, and the second group of MOs includes the second-type MO.

In a possible implementation, the measurement parameter of the first group of MOs is used to determine measurement duration for measuring any MO in the first group of MOs, and the measurement parameter of the second group of MOs is used to determine measurement duration for measuring any MO in the second group of MOs.

In a possible implementation, the measurement parameter of the first group of MOs includes a first controlling factor, and the measurement parameter of the second group of MOs includes a second controlling factor.

The first controlling factor is a multiplier used to calculate the measurement duration of the any MO in the first group of MOs, and the second controlling factor is a multiplier used to calculate the measurement duration of the any MO in the second group of MOs.

In a possible implementation, the first indication information includes a first scaling factor, a difference between 1 and the first scaling factor is a second scaling factor, the first scaling factor is used to calculate the first controlling factor, and the second scaling factor is used to calculate the second controlling factor.

It should be noted that specific implementations and beneficial effects of this aspect are similar to some implementations of the second aspect. For details, refer to the specific implementations and beneficial effects of the second aspect. Details are not described herein again.

According to a seventh aspect, this application provides a communication apparatus. The communication apparatus is a terminal device or a chip in a terminal device. The communication apparatus includes a transceiver module and a processing module.

The transceiver module is configured to receive a measurement configuration, where the measurement configuration is used to configure a plurality of measurement objects MOs, the plurality of MOs include at least one first-type MO that operates on a same frequency as a serving cell, and the first-type MO includes an MO corresponding to conditional handover CHO and/or an MO corresponding to conditional PSCell addition/change CPAC.

The processing module is configured to: if an applicable cell corresponding to a conditional configuration in the first-type MO that operates on a same frequency as the serving cell is a neighboring cell, measure the applicable cell corresponding to the conditional configuration in the first-type MO that operates on a same frequency as the serving cell.

In a possible implementation, when a frequency band in which the first-type MO that operates on a same frequency as the serving cell is located does not include a primary component carrier PCC and a primary secondary component carrier PSCC, the processing module is further configured to measure all neighboring cells in one of the at least one first-type MO that operates on a same frequency as the serving cell.

In a possible implementation, when a frequency band in which the first-type MO that operates on a same frequency as the serving cell is located includes a primary component carrier PCC and/or a primary secondary component carrier PSCC, the processing module is further configured to measure all neighboring cells in an MO of the primary component carrier PCC and/or an MO of the primary secondary component carrier PSCC.

It should be noted that specific implementations and beneficial effects of this aspect are similar to some implementations of the third aspect. For details, refer to the specific implementations and beneficial effects of the third aspect. Details are not described herein again.

According to an eighth aspect, this application provides a communication apparatus. The communication apparatus is a terminal device or a chip in a terminal device. The communication apparatus includes a transceiver module and a processing module.

The transceiver module is configured to receive a measurement configuration and a conditional configuration, where the measurement configuration is used to configure a plurality of measurement objects MOs, the plurality of MOs include a first-type MO, the first-type MO includes an MO corresponding to conditional handover CHO and/or an MO corresponding to conditional PSCell addition/change CPAC, and the conditional configuration is used to configure at least one conditional event for triggering conditional handover CHO and/or conditional PSCell addition/change CPAC.

The processing module is configured to: when the conditional event includes a time-based conditional event or a location-based conditional event, and an applicable cell corresponding to the conditional configuration meets the time-based conditional event or the location-based conditional event, measure only a target MO in the first-type MO, where the target MO is an MO in the first-type MO including the applicable cell corresponding to the conditional configuration.

In a possible implementation, the target MO is associated with a plurality of synchronization signal block measurement timing configuration SMTC windows.

The processing module is specifically configured to measure the target MO only in a first SMTC window, where the first SMTC window is an SMTC window in which the applicable cell corresponding to the conditional configuration is located.

In a possible implementation, the plurality of MOs are MOs in a non-terrestrial network NTN.

It should be noted that specific implementations and beneficial effects of this aspect are similar to some implementations of the fourth aspect. For details, refer to the specific implementations and beneficial effects of the fourth aspect. Details are not described herein again.

According to a ninth aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions, and the processing module executes the instructions stored in the storage module, so that the terminal device performs the method according to any one of the first aspect or the implementations of the first aspect, performs the method according to any one of the third aspect or the implementations of the third aspect, or performs the method according to any one of the fourth aspect or the implementations of the fourth aspect. When the communication apparatus is the chip in the terminal device, the processing module may be a processor, and the transceiver module may be an input/output interface, a pin, a circuit, or the like. The processing module executes instructions stored in the storage module, so that the terminal device performs the method according to any one of the first aspect or the implementations of the first aspect, performs the method according to any one of the third aspect or the implementations of the third aspect, or performs the method according to any one of the fourth aspect or the implementations of the fourth aspect. The storage module may be a storage module (for example, a register or a cache) in the chip, or may be a storage module (for example, a read-only memory or a random access memory) that is in the terminal device and that is located outside the chip.

According to a tenth aspect, an embodiment of this application provides a communication apparatus. The communication apparatus may be the network device in the foregoing implementations, or may be a chip in the network device. The communication apparatus may include a processing module and a transceiver module. When the communication device is the network device, the processing module may be a processor, and the transceiver module may be a transceiver. The network device may further include a storage module, and the storage module may be a memory. The storage module is configured to store instructions, and the processing module executes the instructions stored in the storage module, so that the network device performs the method according to any one of the second aspect or the implementations of the second aspect. When the communication apparatus is the chip in the network device, the processing module may be a processor, and the transceiver module may be an input/output interface, a pin, a circuit, or the like. The processing module executes instructions stored in the storage module, so that the network device performs the method according to any one of the second aspect or the implementations of the second aspect. The storage module may be a storage module (for example, a register or a cache) in the chip, or may be a storage module (for example, a read-only memory or a random access memory) that is in the network device and that is located outside the chip.

According to an eleventh aspect, this application provides a communication apparatus. The apparatus may be an integrated circuit chip. The integrated circuit chip includes a processor. The processor is coupled to a memory. The memory is configured to store a program or instructions. When the program or the instructions is/are executed by the processor, the communication apparatus is enabled to perform the method according to any one of the first aspect or the implementations of the first aspect, perform the method according to any one of the third aspect or the implementations of the third aspect, or perform the method according to any one of the fourth aspect or the implementations of the fourth aspect.

According to a twelfth aspect, this application provides a communication apparatus. The apparatus may be an integrated circuit chip. The integrated circuit chip includes a processor. The processor is coupled to a memory, the memory is configured to store a program or instructions, and when the program or the instructions is/are executed by the processor, the communication apparatus is enabled to perform the method according to any one of the second aspect or the implementations of the second aspect.

According to a thirteenth aspect, an embodiment of this application provides a computer program product including instructions. When the computer program product runs on a computer, the computer is enabled to perform the method according to any one of the first aspect, the second aspect, the third aspect, and the fourth aspect, or the implementations of the foregoing aspects.

According to a fourteenth aspect, an embodiment of this application provides a computer-readable storage medium, including instructions. When the instructions are run on a computer, the computer is enabled to perform the method according to any one of the first aspect, the second aspect, the third aspect, and the fourth aspect, or the implementations of the foregoing aspects.

According to a fifteenth aspect, an embodiment of this application provides a communication system. The communication system includes the network device according to any one of the sixth aspect or the implementations of the sixth aspect, the terminal device according to any one of the fifth aspect or the implementations of the fifth aspect, or the terminal device according to any one of the seventh aspect or the implementations of the seventh aspect, or the terminal device according to any one of the eighth aspect or the implementations of the eighth aspect.

According to the foregoing technical solutions, it can be learned that embodiments of this application have the following advantages.

In this application, the measurement configuration sent by the network device to the terminal device is not only used to configure the plurality of measurement objects MOs, but also may include the first indication information. The first indication information indicates the terminal device to perform grouping based on whether an MO is the first-type MO (including an MO corresponding to conditional handover CHO and/or an MO corresponding to conditional PSCell addition/change CPAC). After the terminal device receives the first indication information, the terminal device groups, based on whether an MO is the first-type MO, the plurality of MOs configured by the network device into the first group of MOs (including only the first-type MOs) and the second group of MOs (excluding the first-type MOs), and correspondingly determines measurement parameters. In a subsequent measurement process, the measurement parameter of the first group of MOs is used to measure the first group of MOs, and the measurement parameter of the second group of MOs is used to measure the second group of MOs. When measuring the plurality of MOs, the terminal device may determine, for the first group of MOs (that is, a group of MOs including only the first-type MOs), the measurement parameter for measuring the first group of MOs, instead of sharing a same measurement parameter with an MO of another type. This helps reduce impact posed on measurement of the first-type MO (that is, an MO corresponding to the CHO/CPAC) when the terminal device measures the plurality of MOs.

**BRIEF DESCRIPTION OF DRAWINGS**

To describe the technical solutions in embodiments of this application more clearly, the following briefly describes the accompanying drawings for describing embodiments. It is clear that the accompanying drawings in the following description show merely some embodiments of this application.

FIG. 1 is a flowchart of a measurement method according to an embodiment of this application;
FIG. 2 is another flowchart of a measurement method according to an embodiment of this application;
FIG. 3 is another flowchart of a measurement method according to an embodiment of this application;
FIG. 4 is a schematic diagram of an embodiment of a communication apparatus according to an embodiment of this application;
FIG. 5 is a schematic diagram of another embodiment of a communication apparatus according to an embodiment of this application;
FIG. 6 is a schematic diagram of another embodiment of a communication apparatus according to an embodiment of this application; and
FIG. 7 is a schematic diagram of another embodiment of a communication apparatus according to an embodiment of this application.

**DESCRIPTION OF EMBODIMENTS**

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the terminology termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first explains some of technical terms in embodiments of this application.

Carrier aggregation (carrier aggregation, CA) is to aggregate at least two component carriers (component carriers, CCs) (also referred to as carrier units) to support a larger transmission bandwidth. A cell corresponding to a primary component carrier (primary component carrier, PCC) is a primary cell (primary cell, PCell), and the primary cell is a cell in which a terminal device establishes an initial connection, or a cell in which a radio resource control (radio resource control, RRC) connection is reestablished, or a cell specified during handover (handover). The primary cell PCell is responsible for radio resource control (radio resource control, RRC) communication with the terminal device. A cell corresponding to a secondary component carrier (secondary component carrier, SCC) is a secondary cell (secondary cell, SCell), and the secondary cell is added/modified/released during RRC connection reconfiguration, and is used to provide an extra radio resource.

A measurement object (measurement object, MO) is also referred to as a measurement target, with a frequency as a basic unit. Each configured measurement object is an independent frequency, and the frequency includes one or more cells (cells). In this application, an MO in which an applicable cell of conditional handover (conditional handover, CHO) is located is referred to as an MO corresponding to the CHO, and the terminal device determines the MO corresponding to the CHO by using a measurement identifier (measurement ID) included in a conditional configuration of the CHO; and an MO in which an applicable cell of conditional PSCell addition/change is located is referred to as an MO corresponding to the conditional PSCell addition/change (conditional PSCell addition/change, CPAC), and the terminal device determines the MO corresponding to the CPAC by using a measurement identifier included in a conditional configuration of the CPAC. In addition, a measurement frequency of a primary component carrier PCC is referred to as an MO of a PCC, a measurement frequency of a primary secondary component carrier PSCC is referred to as an MO of a PSCC, and a measurement frequency of a secondary component carrier SCC is referred to as an MO of an SCC. An MO that operates on a same frequency as a serving cell is referred to as an intra-frequency MO, and an MO that operates on a different frequency from a serving cell is referred to as an inter-frequency MO.

A measurement configuration (measurement configuration, MeasConfig) is configuration information that is sent by a network side to a terminal device and that indicates the terminal device to perform measurement. Generally, the measurement configuration includes information such as a measurement object (measurement object, MO), a report configuration (report configuration, ReportConfig), a measurement identifier (measurement ID), and a measurement quantity configuration (measurement quantity configuration, QuantityConfig).

A conditional configuration (conditional reconfiguration) is configuration information that is sent by a network side to a terminal device and that indicates the terminal device to trigger the CHO or the CPAC. Generally, the conditional configuration includes an execution condition and an execution action. The execution condition may be configured in a form of a measurement identifier (measurement ID). The terminal device may determine a measurement object MO and a measurement report configuration ReportConfig by using the measurement identifier. A measurement object corresponding to the foregoing conditional configuration is referred to as an MO corresponding to the CHO or the CPAC in this application. The foregoing measurement report configuration includes a conditional event. For example, a measurement result of a target cell is higher than a threshold. In addition, the execution action is configured in a form of an RRC reconfiguration message. The RRC reconfiguration message includes a target cell of the CHO or the CPAC (referred to as an applicable cell of the CHO or the CAPC in this application) and an action oriented to the target cell (for example, performing handover or PSCell addition/change to the target cell). The terminal device measures, based on the measurement configuration, the MO corresponding to the CHO or the CAPC, and the network device ensures that the MO includes the applicable cell of the CHO or the CAPC. When the applicable cell of the CHO or the CAPC meets the conditional event, the terminal device triggers, based on the RRC reconfiguration message in the execution action, handover or PSCell addition/change to the applicable cell. In the standard, the execution condition may alternatively be a time-based conditional event and/or a location-based conditional event.

Measurement gap (measurement gap, MG): To measure a reference signal on a specific MO, a terminal device may need to tune an operating frequency of a radio frequency link from a serving cell to a target frequency, resulting in data interruption in the serving cell. The measurement includes intra-frequency measurement (intra-frequency measurement) and inter-frequency measurement (inter-frequency measurement). The intra-frequency measurement means that a serving cell of the terminal device and a to-be-measured target cell are on a same carrier frequency (namely, a central frequency). The inter-frequency measurement means that a serving cell of the terminal device and a target cell are not on a same carrier frequency. If the terminal device needs to perform inter-frequency measurement (including inter-RAT measurement), a simple method is to install two radio frequency receivers in the terminal device, to separately measure a frequency of the serving cell and a frequency of the target cell. However, this causes a cost increase and interference between different frequencies. Therefore, the measurement gap MG is proposed in 3GPP. To be specific, a part of time (that is, time corresponding to the measurement gap (also referred to as GAP time)) is reserved. In this period of time (that is, within the measurement gap), the terminal device does not send or receive any data, but adjusts the receiver to the frequency of the target cell to perform inter-frequency measurement. When the time corresponding to the measurement gap ends, the terminal device switches to the frequency of the current serving cell. Based on a radio frequency capability of the terminal device and an operating bandwidth of the current serving cell, if an MG is required for measuring an MO, the MO is measured within the MG, and another MO is measured outside the MG.

Initial measurement duration is duration that is defined in a protocol and that is used when a terminal device measures only one MO.

Measurement duration is actual measurement duration of each MO that is used when a terminal device simultaneously measures a plurality of MOs. Generally, the terminal device may calculate one or more factors based on some parameters configured by a network device and some factors of the terminal device, and a product of the factor and the initial measurement duration of the MO is the actual measurement duration of the MO.

For ease of understanding, the following first describes a system architecture and an application scenario of the measurement method provided in this application.

The communication method provided in this application may be used in a 5G NR (5G New Radio) system, a sixth-generation mobile communication technology (6th generation mobile communication technology, 6G) system, and a subsequent evolved standard. This is not limited in this application. The communication system includes at least one terminal device and at least one network device.

The terminal device includes a device that provides voice and/or data connectivity for a user. For example, the terminal device may include a handheld device having a wireless connection function, or a processing device connected to a wireless modem. The terminal device may communicate with a core network (for example, a 5G core network (5th generation core, 5GC)) by using a radio access network (radio access network, RAN), and may exchange voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile console (mobile), a remote station (remote station), an access point (access point, AP), a remote terminal (remote terminal) device, an access terminal (access terminal) device, a user terminal (user terminal) device, a user agent (user agent), a user device (user device), or the like. Specifically, the terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology and a specific device form used for the terminal device are not limited in this embodiment of this application. The terminal device in this application may be any one of the foregoing devices or chips. This is not specifically limited herein. Either being a device or a chip, the terminal device can be manufactured, sold, or used as an independent product. In this embodiment and subsequent embodiments, only the terminal device is used as an example for description.

A network device may be any device that has a radio transceiver function, and may be configured to be responsible for a function related to an air interface, for example, a radio link maintenance function, a radio resource management function, and some mobility management functions. The radio link maintenance function is used to maintain a radio link between a network device and a terminal device, and is responsible for protocol conversion between radio link data and internet protocol (internet protocol, IP) data. The radio resource management function may include functions such as radio link establishment and release, and radio resource scheduling and allocation. Some mobility management functions may include configuring the terminal device to perform measurement, evaluating radio link quality of the terminal device, determining handover of the terminal device between cells, and the like. For example, the network device may be an access network device (radio access network, RAN) that currently provides a service for the terminal device. For example, the network device may include a next generation NodeB (next generation NodeB, gNB) in a 5G new radio (new radio, NR) system, or may include a central unit (central unit, CU) and a distributed unit (distributed unit, DU) in a cloud access network (CloudRAN) system. The network device may further include a node (for example, an xNodeB) in a 6G system. This is not specifically limited herein. It should be understood that the network device in this embodiment of this application may be any one of the foregoing devices or a chip in the foregoing device. This is not specifically limited herein. Either being a device or a chip, the network device can be manufactured, sold, or used as an independent product. In this embodiment and subsequent embodiments, only the network device is used as an example for description.

In addition, the measurement method in this application may be used in a scenario of frequency or cell measurement related to a conditional event. For example, for a plurality of MOs to be measured by the terminal device, there is a to-be-measured MO corresponding to conditional handover CHO/conditional PSCell addition/change CPAC (conditional PSCell addition/change, CPAC).

In the conventional technology, when a network device needs a terminal device to measure one or more MOs, the network device sends a measurement configuration to the terminal device. The measurement configuration includes information such as a plurality of measurement objects MOs, a report configuration (report configuration, ReportConfig), a measurement identifier (measurement ID, measId), and a measurement quantity configuration (measurement quantity configuration, quantityConfig). Then, the terminal device groups the plurality of MOs into intra-frequency MOs and inter-frequency/inter-RAT MOs based on intra-frequency measurement (intra-frequency measurement) and inter-frequency measurement (inter-frequency measurement)/inter-RAT measurement (inter-RAT measurement), and then the terminal device separately determines a measurement parameter of the intra-frequency MO and a measurement parameter of the inter-frequency/inter-RAT MO. In this case, the terminal device may measure the intra-frequency MO based on the measurement parameter of the intra-frequency MO, and measure the inter-frequency/inter-RAT MO based on the measurement parameter of the inter-frequency/inter-RAT MO. It can be learned that, in the conventional technology, an MO corresponding to the CHO or an MO corresponding to the CPAC is not considered, and consequently, when the terminal device measures a plurality of MOs, measurement of the MO corresponding to the CHO/CPAC may be negatively affected. For example, because the terminal device does not measure the MO corresponding to the CHO in time, conditional handover is not performed by the terminal device in time.

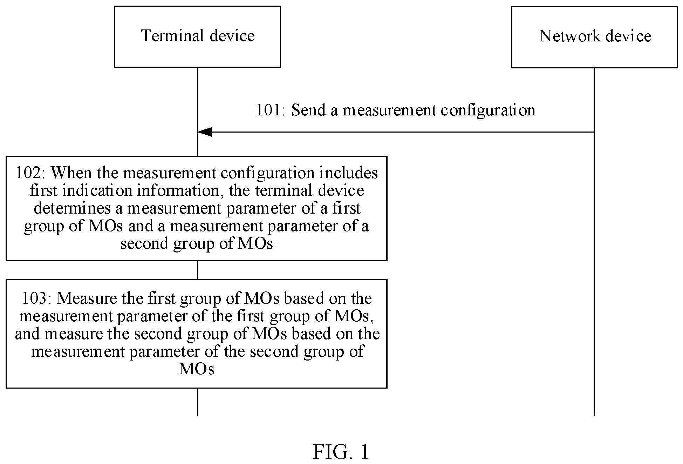

Therefore, some measurement behaviors of the terminal device can be redefined in the measurement method provided in this application, to reduce impact posed on measurement of the MO corresponding to CHO/CPAC when the terminal device measures the plurality of MOs. The following separately describes different embodiments of the measurement method provided in this application by using the procedures shown in FIG. 1, FIG. 2, and FIG. 3.

FIG. 1 shows an embodiment of a measurement method and a measurement configuration method according to this application.

Step 101: A network device sends a measurement configuration to a terminal device, and correspondingly, the terminal device receives the measurement configuration from the network device.

The measurement configuration is used to configure a plurality of measurement objects MOs, and each MO is a frequency. Generally, based on whether a to-be-measured frequency is the same as a frequency of a serving cell, the plurality of MOs may be grouped into intra-frequency MOs and inter-frequency/inter-RAT MOs. The intra-frequency MO is an MO that operates on a same frequency as a serving cell of the terminal device, the inter-frequency MO is an MO that operates on a different frequency from a serving cell of the terminal device, and the inter-RAT MO is an MO that is in a different standard from a current serving cell. In addition, based on whether a moment when the MO is measured is within a measurement gap MG, the plurality of MOs may be grouped into MOs measured within the measurement gap MO and MOs measured outside the measurement gap MO. In addition, based on whether the MO is an MO associated with an execution condition in a CHO/CPAC configuration, the plurality of MOs may be grouped into MOs corresponding to CHO and MOs corresponding to non-CHO/CPAC.

It should be understood that a same MO may be grouped into different groups based on different dimensions. For example, in an aspect, if a frequency of an MO 1 is the same as a frequency of a serving cell of the terminal device, the MO 1 is an intra-frequency MO relative to the terminal device. In another aspect, if the MO 1 includes an applicable cell of conditional handover CHO, the MO 1 is an MO corresponding to the CHO. In still another aspect, if the terminal device determines, based on a radio frequency capability of the terminal device and an operating bandwidth of a current serving cell and according to a rule defined in the standard, that the MO 1 is measured within the MG, the MO 1 is an MO measured within the measurement gap MG.

In this embodiment, the plurality of MOs configured by the network device for the terminal device include at least a first-type MO and a second-type MO. The first-type MO includes an MO corresponding to conditional handover CHO and/or an MO corresponding to conditional PSCell addition/change CPAC, and the second-type MO is an MO other than the first-type MO in the plurality of MOs.

It should be noted that, when the network device configures an MO for the terminal device, the network device may not determine whether each configured MO is the first-type MO or the second-type MO. This is because a measurement configuration and a conditional configuration are different configuration information, and the network device can only determine, with reference to the measurement configuration, the conditional configuration, and a measurement identifier, whether an MO configured in the configuration information is an MO corresponding to the CHO/CPAC. However, the first-type MO and the second-type MO definitely exist in the plurality of MOs configured by the network device for the terminal device.

Specifically, the measurement configuration includes the plurality of measurement objects MOs, and fields such as a report configuration (report configuration, ReportConfig), a measurement identifier (measurement ID, measId), and a measurement quantity configuration (measurement quantity configuration, quantityConfig). This is not specifically described herein.

In this application, in addition to the foregoing fields, the measurement configuration further includes first indication information. The first indication information indicates the terminal device to determine a measurement parameter based on a type of an MO, where the MO includes the first-type MO and the second-type MO. In other words, the first indication information indicates the terminal device to group the plurality of MOs based on whether an MO is the first-type MO, and determine a measurement parameter of each group of MOs.

The measurement parameter is a parameter determined by the terminal device based on a plurality of factors such as a quantity of MOs to be measured by the terminal device and a quantity of measurement resources required for measuring the MOs. Generally, the measurement parameter is used to calculate measurement duration of each MO in a group of MOs. Specifically, measurement duration of an MO is equal to a product of a measurement parameter of the MO and initial measurement duration of the MO. The initial measurement duration is duration that is defined in a protocol and that is used when the terminal device measures only one MO.

For example, it is assumed that the terminal device needs to measure three MOs: an MO 1, an MO 2, and an MO 3, where initial measurement duration of the MO 1 is T1, initial measurement duration of the MO 2 is T2, and initial measurement duration of the MO 3 is T3. In this case, if the MO 1, the MO 2, and the MO 3 belong to a same group of MOs and share a measurement parameter $\alpha$, measurement duration of the MO 1 is $\alpha \times$ T1, measurement duration of the MO 2 is $\alpha \times$ T2, and measurement duration of the MO 3 is $\alpha \times$ T3. If the MO 1 and the MO 2 belong to a same group of MOs (it is assumed that the MO 1 and the MO 2 share a measurement parameter $\beta$), and the MO 3 belong to another group of MOs (it is assumed that a measurement parameter is $\gamma$), measurement duration of the MO 1 is $\beta \times$ T1, measurement duration of the MO 2 is $\beta \times$ T2, and measurement duration of the MO 3 is $\gamma \times$ T3.

Specifically, the measurement parameter includes a controlling factor, the controlling factor is determined by using one or more factors, and each factor indicates a factor that affects the measurement duration. Therefore, the purpose of adjusting the measurement parameter may be achieved by adjusting one or more factors that affect the controlling factor. In this application, the factor that affects the controlling factor includes a scaling factor (sharing factor), and the scaling factor indicates a ratio of measurement resources required for measuring a group of MOs to a quantity of measurement resources occupied by the terminal device for measuring all MOs. The measurement resource is a measurement occasion (occasion) within a measurement gap MG, or a measurement unit (or a measurement link) used by the terminal device to measure an MO. In addition, because a value of the scaling factor is inversely correlated with a value of the controlling factor, and the value of the controlling factor is positively correlated with the measurement duration, when other factors remain unchanged, the scaling factor is inversely correlated with the measurement duration. That is, a larger value of the scaling factor indicates a smaller value of the controlling factor, and shorter measurement duration of the MO determined based on the controlling factor.

It should be understood that the foregoing measurement parameter is used for an MO rather than a group of MOs, that is, MOs in a same group of MOs may have same or different measurement parameters. The foregoing scaling factor is used for a group of MOs, that is, MOs in a same group of MOs have a same scaling factor.

It should be understood that the measurement parameter may include only the foregoing controlling factor, that is, the measurement parameter is the foregoing controlling factor. However, in an actual application, the measurement parameter may further include another parameter similar to the foregoing controlling factor, that is, the measurement parameter is determined by using both the controlling factor and the another parameter. This is not specifically limited in this application. For ease of description, in this embodiment and subsequent embodiments, only an example in which the measurement parameter is the foregoing controlling factor is used for description.

In this application, the first indication information may include a parameter (for example, a scaling factor) used for determining the foregoing measurement parameter, or may not include a parameter used for determining the foregoing measurement parameter. Specifically, the first indication information may be implemented in the following plurality of manners.

In a possible implementation, the first indication information may be used as only one piece of indication information, and does not carry content for calculating a measurement parameter. In other words, the content of the first indication information does not participate in a process of calculating the measurement parameter by the terminal device. In this case, the first indication information may be a new field added to the measurement configuration except fields such as a reporting configuration (ReportConfig), a measurement identifier (measId), and a measurement quantity configuration (quantityConfig). For example, the first indication information may be a new 1-bit indication added to MeasConfig. When the bit is 1, the terminal device is indicated to perform grouping based on a type of an MO, that is, perform grouping based on whether an MO is the first-type MO, and determine a measurement parameter of each group. When the bit is 0, the terminal device is indicated to perform grouping in a grouping manner of the MO in the conventional technology, and determine a measurement parameter of each group. A field or a character indicating the first indication information is not limited in this application. The first indication information is used as a newly added field indicating the terminal device to determine the measurement parameter based on the type of the MO. After the terminal device receives the first indication information, the terminal device groups the plurality of MOs based on whether an MO is the first-type MO, and determines the measurement parameter of each group of MOs based on other information (for example, information such as a quantity of first-type MOs). For a specific calculation process, refer to related descriptions in step 102. Details are not described herein again.

In another possible implementation, the first indication information may further include a parameter used for determining a measurement parameter. To be specific, content of the first indication information needs to participate in a process of calculating the measurement parameter by the terminal device. Specifically, the first indication information includes a scaling factor, so that after the terminal device receives the first indication information, the terminal device may not only learn that the measurement parameter needs to be determined based on the type of the MO, but also may calculate the measurement parameter of each type of MO by using the scaling factor in the first indication information. Optionally, the first indication information includes a first scaling factor, and the first scaling factor is a first-type scaling factor. The terminal device calculates the measurement parameter of the first-type MO based on the first scaling factor, and further calculates the measurement parameter of the second-type MO. For a specific calculation process, refer to related descriptions in step 102. Details are not described herein again.

For example, the first indication information may be represented by a 2-bit character, and a value of the character indicates the first scaling factor. For example, as shown in Table 1-1:

**Table 1-1**

| First indication information | Value of a first scaling factor |
|---|---|
| '00' | Equal splitting (Equal splitting) |
| '01' | 25 |
| '10' | 50 |
| '11' | 75 |

When a value of the first indication information is "00", it indicates that the terminal device does not determine the measurement parameter of the MO based on the type of the MO. For example, both the first controlling factor and the second controlling factor are determined based on a total quantity of MOs. When a value of the first indication information is "01", it indicates that the value of the first scaling factor is 25%; when the value of the first indication information is "10", it indicates that the value of the first scaling factor is 50%; or when the value of the first indication information is "11", it indicates that the value of the first scaling factor is 75%.

In this embodiment, when the terminal device receives the measurement configuration and the measurement configuration includes the first indication information, the terminal device performs step 102. When the terminal device receives the measurement configuration but the measurement configuration does not include the first indication information, the terminal device calculates the measurement parameter of each group in a grouping manner in the conventional technology. For example, when the measurement configuration does not include the first indication information, the terminal device may group, based on whether a to-be-measured frequency is the same as a frequency of a serving cell, a plurality of MOs configured by the network device into intra-frequency MOs and inter-frequency MOs, and then separately calculate a measurement parameter used by the intra-frequency MO and a measurement parameter used by the inter-frequency MO. A grouping manner and a measurement parameter calculation manner in the conventional technology are not limited in this application.

Step 102: When the measurement configuration includes the first indication information, the terminal device determines a measurement parameter of a first group of MOs and a measurement parameter of a second group of MOs.

In this step, the terminal device may identify, based on the received measurement configuration and a conditional configuration, whether each of the plurality of MOs configured by the network device by using the measurement configuration is the first-type MO. Then, the terminal device groups the first-type MOs in the plurality of MOs into the first group of MOs, and groups MOs other than the first-type MOs in the plurality of MOs into the second group of MOs.

It should be understood that an action in which the terminal device groups the plurality of MOs configured by the network device into the first group of MOs and the second group of MOs may specifically be represented as: The terminal device separately calculates two measurement parameters, where one measurement parameter is used by the first group of MOs, and the other measurement parameter is used by the second group of MOs; or the terminal device separately calculates a measurement parameter of an MO in the first group of MOs and a measurement parameter of an MO in the second group of MOs by using two different controlling factors.

In this step, when implementations of the first indication information are different, manners in which the terminal device determines the measurement parameter of the first group of MOs and the measurement parameter of the second group of MOs are not completely the same.

In a possible implementation, the first indication information is not only used as a character or a field indicating whether to calculate the measurement parameter based on the type of the MO, but also needs to participate in a process in which the terminal device calculates the measurement parameter. Specifically, the first indication information includes a scaling factor, and the terminal device calculates the controlling factor based on the scaling factor, and further calculates the measurement parameter based on the controlling factor. Because the first indication information indicates that the terminal device to perform grouping based on whether an MO is the first-type MO, the first indication information may carry only the first scaling factor (that is, a scaling factor of the first group of MOs). The terminal device calculates a second scaling factor (that is, the scaling factor of the first group of MOs) based on the first scaling factor, that is, the terminal device calculates a difference between 1 and the first scaling factor, to obtain the second scaling factor. Then, the terminal device calculates a first controlling factor based on the first scaling factor, to obtain the measurement parameter of the first group of MOs. In addition, the terminal device calculates a second controlling factor based on the second scaling factor, to obtain the measurement parameter of the second group of MOs.

For example, the first scaling factor is one of a plurality of scaling factors used to determine the first controlling factor. To be specific, a product of a reciprocal of the first scaling factor and another factor (for example, a factor that affects the measurement duration of each MO in the first group of MOs, for example, a quantity of MOs in the first group of MOs) is the first controlling factor. The second scaling factor is one of a plurality of scaling factors used to determine the second controlling factor. To be specific, a product of a reciprocal of the second scaling factor and another factor (for example, a factor that affects the measurement duration of each MO in the second group of MOs, for example, a quantity of MOs in the second group of MOs) is the second controlling factor.

For example, the first scaling factor is used as an example. The terminal device may calculate the first controlling factor A1 by using the following formula (1-1), and calculate the second controlling factor A2 by using the following formula (1-2):

$$A1 = \theta_1 \times N_1 \times (1/X), \text{ formula (1-1)}$$

$$A2 = \theta_2 \times N_2 \times (1/(1-X)), \text{ formula (1-2)}$$

In the formula, X represents the scaling factor of the first group of MOs; (1-X) represents the scaling factor of the second group of MOs; $N_1$ represents a quantity of MOs in the first group of MOs, that is, a quantity of first-type MOs in the plurality of MOs configured by the network device for the terminal device; $N_2$ represents a quantity of MOs in the second group of MOs, that is, a quantity of second-type MOs in the plurality of MOs configured by the network device for the terminal device; $\theta_1$ represents another factor that affects measurement duration of an MO in the first group of MOs; and $\theta_2$ represents another factor that affects measurement duration of an MO in the second group of MOs.

It should be understood that the formula (1-1) and the formula (1-2) are merely examples listed for ease of understanding by a reader, and a formula used in actual calculation may be a variation of the foregoing example or may be more complex than the foregoing example. A formula for calculating the controlling factor based on the scaling factor is not limited in this application.

Optionally, the first scaling factor in this implementation may not be carried in the first indication information, but is carried in another field or character in the measurement configuration. In this case, the measurement configuration includes the first indication information and second indication information different from the first indication information, where the first indication information is used as only one piece of indication information, and the second indication information includes the first scaling factor. In this case, a manner in which the terminal device calculates the first controlling factor and the second controlling factor is the same as that in the foregoing implementation. Details are not described herein again.

It should be noted that, in this implementation, the manner of calculating the measurement parameter of the first group of MOs and the measurement parameter of the second group of MOs may be applicable to measurement within the measurement gap MG, and may also be applicable to measurement outside the measurement gap MO. This is not specifically limited in this implementation.

In another possible implementation, the first indication information is used only as a character or a field indicating whether to calculate the measurement parameter based on the type of the MO, and does not carry content for calculating the measurement parameter. In other words, the content of the first indication information does not participate in a process in which the terminal device calculates the measurement parameter. In this case, the terminal device determines the measurement parameter based on a quantity of different types of MOs, a preconfigured scaling factor, or another factor.

Specifically, the terminal device separately determines the measurement parameter of the first group of MOs and the measurement parameter of the second group of MOs based on whether the plurality of MOs configured by the network device are the MOs measured within the measurement gap MG or the MOs measured outside the measurement gap MG.

Manner 1: When the first group of MOs and the second group of MOs are MOs measured outside a measurement gap, in a process in which the terminal device determines the measurement parameter of the first group of MOs and the measurement parameter of the second group of MOs, the terminal device uses a third scaling factor as the scaling factor of the first group of MOs to calculate the first controlling factor and the second controlling factor.

In an implementation, the third scaling factor may be a preset scaling factor. To be specific, the network device and the terminal device agree on a scaling factor for calculating the measurement parameter of the first-type MO when grouping is performed based on whether an MO is the first-type MO. For example, a value of the preset third scaling factor may be 25%, 50%, or 75%, or certainly, may be another value. This is not specifically limited herein.

In another implementation, the third scaling factor is a scaling factor determined by the terminal device based on a quantity of first-type MOs and/or a total quantity of MOs configured by the terminal device. In other words, when the terminal device receives the measurement configuration, the terminal device can determine that the measurement configuration carries the first indication information, but the first indication information does not include content for calculating the measurement parameter of the first-type MO outside the measurement gap. In this case, the terminal device determines the third scaling factor based on the quantity of first-type MOs, or based on the quantity of first-type MOs and the total quantity of MOs configured by the terminal device.

For example, the terminal device may determine the third scaling factor only based on the quantity of first-type MOs. For example, when the quantity of first-type MOs is relatively small (for example, the quantity of first-type MOs is less than a first preset threshold), the terminal device determines that the third scaling factor is 50%; or when the quantity of first-type MOs is relatively large (for example, the quantity of first-type MOs is greater than a second preset threshold), the terminal device determines that the third scaling factor is 75%. The first preset threshold is less than the second preset threshold. It should be understood that the first preset threshold and the second preset threshold mentioned in this example may be empirical values, and may be adjusted based on an actual application scenario. Specifically, the first preset threshold and the second preset threshold in the foregoing example are not limited in this application.

For example, the terminal device may determine the third scaling factor based on the quantity of first-type MOs and the total quantity of MOs configured by the terminal device. For example, the terminal device may calculate a ratio of the quantity of first-type MOs to the total quantity of MOs configured by the terminal device. When the ratio is less than a third preset threshold, the terminal device determines that the third scaling factor is 50%; or when the ratio is greater than a third preset threshold, the terminal device determines that the third scaling factor is 75%. The third preset threshold is less than the third preset threshold. It should be understood that the third preset threshold and the fourth preset threshold mentioned in this example may be empirical values, and may be adjusted based on an actual application scenario. Specifically, the third preset threshold and the fourth preset threshold in the foregoing example are not limited in this application.

It should be understood that, after the terminal device calculates the third scaling factor by using any one of the foregoing examples, the terminal device may calculate the first controlling factor (that is, the measurement parameter of the first group of MOs) and the second controlling factor (that is, the measurement parameter of the second group of MOs) by substituting parameters such as the third scaling factor, the quantity of MOs in the first group, and the quantity of MOs in the second group into the foregoing formula (1-1) and formula (1-2).

Manner 2: When the first group of MOs and the second group of MOs are MOs measured within a measurement gap, in a process in which the terminal device determines the measurement parameter of the first group of MOs and the measurement parameter of the second group of MOs, the terminal device uses a fourth scaling factor as the scaling factor of the first group of MOs to calculate the first controlling factor and the second controlling factor.

In an implementation, the fourth scaling factor may be a preset scaling factor. Specifically, details are the same as the first implementation in Manner 1, and details are not described herein again.

In another implementation, the fourth scaling factor is a scaling factor determined by the terminal device based on a quantity of first-type MOs and/or a total quantity of MOs configured by the terminal device. Specifically, details are the same as the second implementation in Manner 1, and details are not described herein again.

In another implementation, the fourth scaling factor is an existing configured scaling factor. The existing configured scaling factor is a scaling factor configured for the terminal device based on the conventional technology. In the conventional technology, the terminal device needs to determine a carrier-specific scaling factor (carrier-specific scaling factor) for an MO that is measured within a measurement gap. The carrier-specific scaling factor may be a scaling factor used for determining a group in a conventional grouping manner. For example, the carrier-specific scaling factor may be a scaling factor used to determine a measurement parameter of an intra-frequency MO. However, in this implementation, the existing configured scaling factor (for example, the scaling factor used to determine the measurement parameter of the intra-frequency MO) is used as the scaling factor of the first group of MOs, to calculate the controlling factor of the first group of MOs.

Manner 3: When the first group of MOs and the second group of MOs are MOs measured outside a measurement gap, the terminal device determines the first controlling factor based on a quantity of MOs in the first group of MOs and at least one of an MO of a primary component carrier PCC and an MO of a primary secondary component carrier PSCC; and determines the second controlling factor based on a quantity of MOs in the second group of MOs.

In an implementation, the first controlling factor is equal to a union set of MOs in a quantity of MOs of the primary component carrier PCC and a quantity of MOs in the first group of MOs. Generally, there is one MO of the primary component carrier PCC. For example, if the quantity of first-type MOs (excluding the MOs of the PCC) that are measured outside the measurement gap and that are configured by the network device is 3, the first controlling factor A1 = 1 (that is, the quantity of MOs of the PCC) + 3 (that is, the quantity of first-type MOs measured outside the measurement gap) = 4.

Optionally, the second controlling factor is equal to the quantity of MOs in the second group of MOs. For example, if the quantity of second-type MOs that are measured outside the measurement gap and that are configured by the network device is 4, the second controlling factor A2 = 4 (that is, the quantity of second-type MOs that are measured outside the measurement gap).

In the conventional technology, the terminal device does not group a plurality of MOs based on a type of an MO, to determine a measurement parameter. A controlling factor corresponding to an MO of a PCC is A = 1, a first group of MOs and a second group of MOs correspond to a same controlling factor, and the controlling factor is determined based on a quantity of MOs in the first group of MOs and a quantity of MOs in the second group of MOs, that is, A= 7. It can be learned that, according to this implementation, the controlling factor of the first group of MOs is decreased, that is, the measurement duration for measuring the first group of MOs by the terminal device is decreased.

This implementation may be understood as follows: The first group of MOs and the primary component carrier PCC of the terminal device share one measurement resource, and the second group of MOs (including inter-frequency MOs measured by the terminal device outside the measurement gap) use another measurement resource.

In another implementation, when the terminal device has a primary component carrier PCC, a primary secondary component carrier PSCC, and a secondary component carrier SCC, the terminal device determines the first controlling factor based on a union set of MOs in the MO of the primary component carrier PCC, the MO of the primary secondary component carrier PSCC, and the quantity of MOs in the first group of MOs, and determines the second controlling factor based on a quantity of MOs in the second group of MOs (that is, a quantity of second-type MOs).

Generally, there is one MO of the primary component carrier PCC, and there is one MO the primary secondary component carrier PSCC. For example, if the quantity of first-type MOs (excluding the MOs of the PCC and MOs of the PSCC) that are measured outside the measurement gap and that are configured by the network device is 3, a quantity of MOs corresponding to CHO is 1, and a quantity of MOs corresponding to CPAC is 2. For the MOs corresponding to the CHO, the first controlling factor A1 = 1 (that is, the quantity of MOs of the primary component carrier PCC) + 1 (that is, the quantity of MOs corresponding to the CHO that are measured outside the measurement gap) = 2. For the MOs corresponding to the CPAC, the first controlling factor A1 = 2 (that is, the quantity of MOs of the primary secondary component carrier PSCC) + 2 × 2 (that is, the quantity of MOs corresponding to the CPAC measured outside the measurement gap is multiplied by 2) = 6.

Optionally, the second controlling factor is equal to the quantity of MOs in the second group of MOs. For example, if the quantity of second-type MOs that are measured outside the measurement gap and that are configured by the network device is 4, the second controlling factor A2 = 2 × 4 = 8 (that is, the quantity of second-type MOs that are measured outside the measurement gap is multiplied by 2).

In the conventional technology, the terminal device does not group a plurality of MOs based on a type of an MO, to determine a measurement parameter. A controlling factor corresponding to an MO of a PCC is A= 1, a controlling factor corresponding to an MO of a PSCC is A = 2, a first group of MOs and a second group of MOs correspond to a same controlling factor, and the controlling factor is determined based on a quantity of MOs in the first group of MOs and a quantity of MOs in the second group of MOs, that is, A = 2 × (3 + 4) = 14. It can be learned that, according to this implementation, the controlling factor of the first group of MOs is decreased, that is, the measurement duration for measuring the first group of MOs by the terminal device is decreased.

This implementation may be understood as follows: An MO corresponding to CHO in the first group of MOs and the primary component carrier PCC of the terminal device share one measurement resource; the primary secondary component carrier PSCC and an MO corresponding to CPAC in the first group of MOs occupy one half of another measurement resource; and the second group of MOs (including an inter-frequency MO and an MO of the SCC that are measured by the terminal device outside the measurement gap) share a remaining half of the another measurement resource.

It should be understood that, based on different content carried in the first indication information and different quantities of MOs of different types, the terminal device may adaptively select any one of the foregoing implementations to determine the measurement parameter of the first group of MOs and the measurement parameter of the second group of MOs.

Step 103: The terminal device measures the first group of MOs based on the measurement parameter of the first group of MOs, and measures the second group of MOs based on the measurement parameter of the second group of MOs.

Specifically, the terminal device first determines, based on a measurement parameter, measurement duration of each MO in a group corresponding to the measurement parameter, and then measures each MO based on a parameter such as a measurement quantity in the measurement configuration.

For the first group of MOs, the terminal device determines duration of each MO in the first group of MOs based on the measurement parameter of the first group of MOs and initial measurement duration of each MO in the first group of MOs, and then measures an MO corresponding to the measurement duration based on the measurement duration of each MO in the first group of MOs. The measurement parameter of the first group of MOs is a first controlling factor, and the first controlling factor is a multiplier used to calculate the measurement duration of the any MO in the first group of MOs. Specifically, the terminal device calculates a product of the first controlling factor and initial measurement duration of one first-type MO in the first group of MOs, to obtain the measurement duration of the first-type MO. Similarly, the terminal device may calculate the measurement duration of each MO in the first group of MOs, so that the terminal device measures each first-type MO based on the measurement duration of the first-type MO.

For example, it is assumed that the first group of MOs includes three MOs: an MO 1, an MO 2, and an MO 3, where initial measurement duration of the MO 1 is T1, initial measurement duration of the MO 2 is T2, and initial measurement duration of the MO 3 is T3. In this case, if the measurement parameter of the first group of MOs is A1, the measurement duration of the MO 1 is $A1 \times T1$, the measurement duration of the MO 2 is $A2 \times T2$, and the measurement duration of the MO 3 is $A3 \times T3$. Therefore, the terminal device measures each MO based on the measurement duration of each MO.

For the second group of MOs, the terminal device determines measurement duration of each MO in the second group of MOs based on the measurement parameter of the second group of MOs and initial measurement duration of each MO in the second group of MOs, and measures an MO corresponding to the measurement duration based on the measurement duration of each MO in the second group of MOs. Specifically, the measurement parameter of the first group of MOs includes a first controlling factor, and the measurement parameter of the second group of MOs includes a second controlling factor. The second controlling factor is a multiplier used to calculate the measurement duration of the any MO in the second group of MOs. Specifically, the terminal device calculates a product of the second controlling factor and initial measurement duration of one second-type MO in the second group of MOs, to obtain the measurement duration of the second-type MO. Similarly, the terminal device may calculate the measurement duration of each MO in the second group of MOs, so that the terminal device measures each second-type MO based on the measurement duration of the second-type MO. Specifically, details are similar to the first group of MOs, and details are not described herein again.

In this embodiment, the measurement configuration sent by the network device to the terminal device is not only used to configure the plurality of measurement objects MOs, but also may include the first indication information. The first indication information indicates the terminal device to perform grouping based on whether an MO is the first-type MO (including an MO corresponding to conditional handover CHO and/or an MO corresponding to conditional PSCell addition/change CPAC). After the terminal device receives the first indication information, the terminal device groups, based on whether an MO is the first-type MO, the plurality of MOs configured by the network device into the first group of MOs (including only the first-type MOs) and the second group of MOs (excluding the first-type MOs), and correspondingly determines measurement parameters. In a subsequent measurement process, the measurement parameter of the first group of MOs is used to measure the first group of MOs, and the measurement parameter of the second group of MOs is used to measure the second group of MOs. When measuring the plurality of MOs, the terminal device may determine, for the first group of MOs (that is, a group of MOs including only the first-type MOs), the measurement parameter for measuring the first group of MOs, instead of sharing a same measurement parameter with an MO of another type. This helps reduce impact posed on measurement of the first-type MO (that is, an MO corresponding to the CHO/CPAC) when the terminal device measures the plurality of MOs.

Further, because a value of the scaling factor is inversely correlated with a value of the controlling factor, and the value of the controlling factor is positively correlated with the measurement duration, when other factors remain unchanged, the scaling factor is inversely correlated with the measurement duration. That is, a larger value of the scaling factor indicates a smaller value of the controlling factor, and shorter measurement duration of the MO determined based on the controlling factor. If the measurement duration is shorter, the terminal device can measure the MO more quickly. Therefore, the value of the scaling factor may be appropriately increased to measure one MO or a group of MOs as soon as possible. For example, if the value of the first scaling factor may be set to be greater than 50%, there is a higher probability that the measurement duration of each MO in the first group of MOs calculated by the terminal device is less than the measurement duration of each MO in the second group of MOs, to preferentially measure the first group of MOs. In other words, the first-type MO is preferentially measured.

In this embodiment, when the value of the first scaling factor is greater than the value of the second scaling factor (that is, the value of the first scaling factor is greater than 50%), the terminal device shortens the measurement duration of the first-type MO at the cost of increasing the measurement duration of the second-type MO, to ensure that the terminal device can determine in time whether a conditional event of the first-type MO is met, and trigger conditional handover or PSCell addition/change in time.

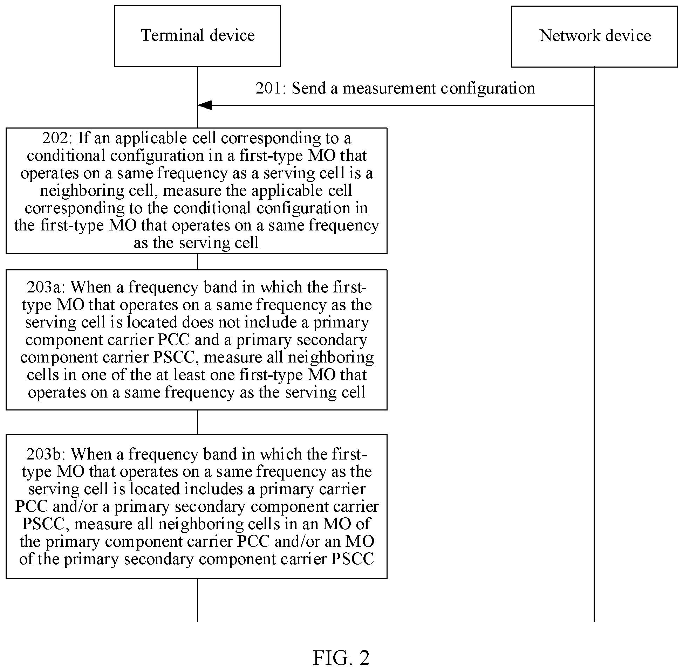

The following describes another implementation of the measurement method provided in this application with reference to FIG. 2.

Step 201: A network device sends a measurement configuration to a terminal device, and correspondingly, the terminal device receives the measurement configuration from the network device.

The measurement configuration is used to configure a plurality of measurement objects MOs, and each MO is a frequency. Generally, based on whether a to-be-measured frequency is the same as a frequency of a serving cell, the plurality of MOs may be grouped into intra-frequency MOs and inter-frequency/inter-RAT MOs. The intra-frequency MO is an MO that operates on a same frequency as a serving cell of the terminal device, the inter-frequency MO is an MO that operates on a different frequency from a serving cell of the terminal device, and the inter-RAT MO is an MO that is in a different standard from a current serving cell. In addition, based on whether a moment when the MO is measured is within a measurement gap MG, the plurality of MOs may be grouped into MOs measured within the measurement gap MO and MOs measured outside the measurement gap MO. In addition, based on whether the MO is an MO associated with an execution condition in a CHO/CPAC configuration, the plurality of MOs may be grouped into MOs corresponding to CHO and MOs corresponding to non-CHO/CPAC.

It should be understood that a same MO may be grouped into different groups based on different dimensions. For example, in an aspect, if a frequency of an MO 1 is the same as a frequency of a serving cell of the terminal device, the MO 1 is an intra-frequency MO relative to the terminal device. In another aspect, if the MO 1 includes an applicable cell of conditional handover CHO, the MO 1 is an MO corresponding to the CHO. In still another aspect, if the terminal device determines, based on a radio frequency capability of the terminal device and an operating bandwidth of a current serving cell and according to a rule defined in the standard, that the MO 1 is measured within the MG, the MO 1 is an MO measured within the measurement gap MG.

In this embodiment, the plurality of MOs configured by the network device for the terminal device include at least a first-type MO and a second-type MO. The first-type MO in the plurality of MOs includes an MO corresponding to conditional handover CHO and/or an MO corresponding to conditional PSCell addition/change CPAC, and the second-type MO is an MO other than the first-type MO in the plurality of MOs.

It should be noted that, when the network device configures an MO for the terminal device, the network device may not determine whether each configured MO is the first-type MO or the second-type MO. This is because a measurement configuration and a conditional configuration are different configuration information, and the network device can only determine, with reference to the measurement configuration, the conditional configuration, and a measurement identifier, whether an MO configured in the configuration information is an MO corresponding to the CHO/CPAC. However, the first-type MO and the second-type MO definitely exist in the plurality of MOs configured by the network device for the terminal device.

It should be noted that in this embodiment, the plurality of MOs configured by the network device for the terminal device include at least one first-type MO that operates on a same frequency as a serving cell. The serving cell is a cell that provides a service for the terminal device. The first-type MO that operates on a same frequency as the serving cell means that a frequency of a to-be-measured reference signal in the first-type MO is the same as a frequency of a to-be-measured reference signal of the serving cell in which the terminal device is located. Optionally, a frequency band in which the first-type MO that operates on a same frequency as the serving cell is located may be an FR2 frequency band (for example, a frequency band above 24.25 GHz). In this case, the first-type MO may be referred to as a first-type MO that operates on a same frequency as the FR2.

Specifically, the measurement configuration includes the plurality of measurement objects MOs, and further includes fields such as a report configuration (report configuration, ReportConfig), a measurement identifier (measurement ID, measId), and a measurement quantity configuration (measurement quantity configuration, quantityConfig). This is not specifically described herein.

In this embodiment, after the terminal device receives the measurement configuration, the terminal device further calculates a measurement parameter of each of the plurality of MOs. Optionally, the terminal device may determine the measurement parameter of the first-type MO in the plurality of MOs in a manner of calculating a measurement parameter in the conventional technology, or may use a manner of calculating the measurement parameter of the first-type MO in the foregoing embodiment corresponding to FIG. 1. This is not specifically limited herein.

In addition, after the terminal device receives the measurement configuration, to ensure that the terminal device can determine in time whether a conditional event of the first-type MO is met, the terminal device needs to determine whether an applicable cell (applicable cell) corresponding to the conditional configuration in each first-type MO is a neighboring cell. In the conventional technology, the terminal device measures a neighboring cell in only one intra-frequency MO in one frequency band (band) of FR2, and does not measure a neighboring cell in another MO (that is, measures only a serving cell in another MO). If there is a primary component carrier PCC/primary secondary component carrier PSCC in the foregoing frequency band, the terminal device measures all neighboring cells in an MO corresponding to the primary component carrier PCC/an MO corresponding to primary secondary component carrier PSCC; or if there is no primary component carrier PCC/primary secondary component carrier PSCC in the foregoing frequency band, the terminal device measures all neighboring cells in an MO corresponding to any secondary component carrier SCC. However, when the first-type MO is an intra-frequency MO corresponding to a secondary component carrier SCC, according to a measurement rule defined in the conventional technology, the terminal device does not necessarily measure a neighboring cell in the first-type MO that is used as the intra-frequency MO corresponding to the secondary component carrier SCC. Therefore, a conditional event of the applicable cell in the first-type MO cannot be triggered. However, in this embodiment, when the terminal device determines that the applicable cell corresponding to the conditional configuration in the first-type MO that operates on a same frequency as the serving cell is a neighboring cell, the terminal device performs step 202.

Step 202: If an applicable cell corresponding to a conditional configuration in the first-type MO that operates on a same frequency as the serving cell is a neighboring cell, the terminal device measures the applicable cell corresponding to the conditional configuration in the first-type MO that operates on a same frequency as the serving cell.

The first-type MO in step 202 is a first-type MO that operates on a same frequency as the serving cell. When the applicable cell corresponding to the conditional configuration in the first-type MO is a neighboring cell, the terminal device measures the applicable cell corresponding to the conditional configuration in the first-type MO. In other words, the terminal device measures a neighboring cell in the first-type MO that operates on a same frequency as the serving cell.

Step 203a: When a frequency band in which the first-type MO that operates on a same frequency as the serving cell is located does not include a primary component carrier PCC and a primary secondary component carrier PSCC, the terminal device measures all neighboring cells in one of the at least one first-type MO that operates on a same frequency as the serving cell.

In this implementation, when there is no primary component carrier PCC or primary secondary component carrier PSCC in the foregoing frequency band, the terminal device measures all neighboring cells in a first-type MO that operates on a same frequency as the serving cell, and measures an applicable cell serving as the neighboring cell in another first-type MO that operates on a same frequency as the serving cell.

Step 203b: When a frequency band in which the first-type MO that operates on a same frequency as the serving cell is located includes a primary component carrier PCC and/or a primary secondary component carrier PSCC, the terminal device measures all neighboring cells in an MO of the primary component carrier PCC and/or an MO of the primary secondary component carrier PSCC.

In this implementation, when there is a primary component carrier PCC and/or a primary secondary component carrier PSCC in the foregoing frequency band, the terminal device measures all neighboring cells in an MO corresponding to the primary component carrier PCC and/or an MO corresponding to the primary secondary component carrier PSCC. In addition, an extra measurement resource needs to be added to measure an applicable cell serving as a neighboring cell in a first-type MO that operates on a same frequency as the serving cell.

In this embodiment, a measurement behavior of the terminal device is modified. When the first-type MO is an FR2 intra-frequency MO, the terminal device certainly measures an applicable cell in the first-type MO, to ensure that the terminal can determine in time whether a conditional event of the first-type MO is met, and trigger conditional handover or conditional PSCell addition/change in time.

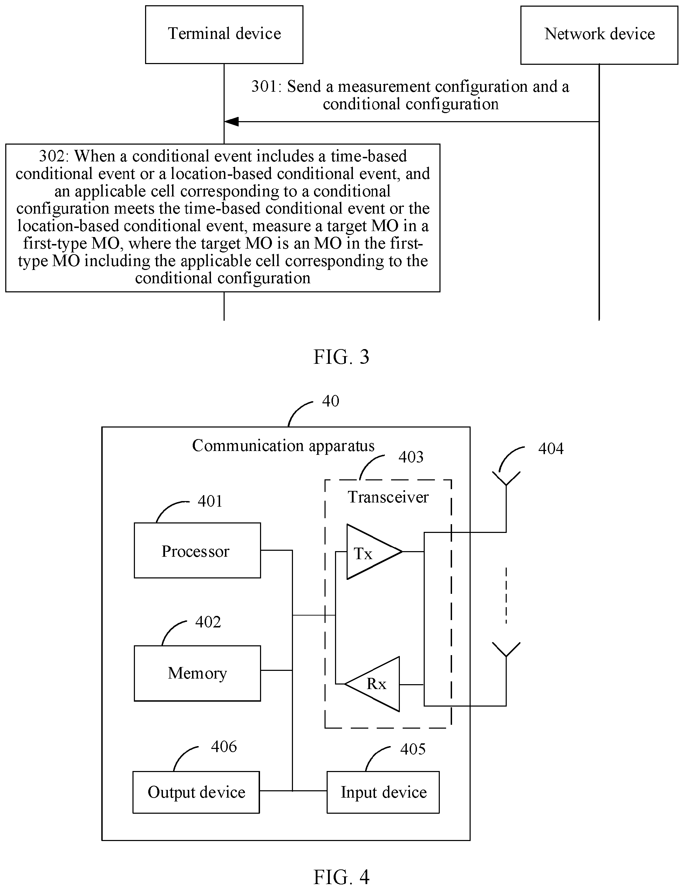

The following describes another implementation of the measurement method provided in this application with reference to FIG. 3.

Step 301: A network device sends a measurement configuration and a conditional configuration to a terminal device. Correspondingly, the terminal device receives the measurement configuration and the conditional configuration from the network device.

The measurement configuration is used to configure a plurality of measurement objects MOs, and each MO is a frequency. Generally, based on whether a to-be-measured frequency is the same as a frequency of a serving cell, the plurality of MOs may be grouped into intra-frequency MOs and inter-frequency/inter-RAT MOs. The intra-frequency MO is an MO that operates on a same frequency as a serving cell of the terminal device, the inter-frequency MO is an MO that operates on a different frequency from a serving cell of the terminal device, and the inter-RAT MO is an MO that is in a different standard from a current serving cell. In addition, based on whether a measured frequency is in a frequency band in which a non-terrestrial network (non-terrestrial network, NTN) is located or in a frequency band in which a terrestrial network (terrestrial network, TN) is located, the plurality of MOs are grouped into NTN MOs and TN MOs. In addition, based on whether the MO is an MO associated with an execution condition in a CHO/CPAC configuration, the plurality of MOs may be grouped into MOs corresponding to CHO and MOs corresponding to non-CHO/CPAC.

It should be understood that a same MO may be grouped into different groups based on different dimensions. For example, in an aspect, if a frequency of an MO 1 is the same as a frequency of a serving cell of the terminal device, the MO 1 is an intra-frequency MO relative to the terminal device. In another aspect, if the MO 1 includes an applicable cell of conditional handover CHO, the MO 1 is an MO corresponding to the CHO. In still another aspect, if a frequency of the MO 1 is in a frequency band in which the non-terrestrial network NTN is located, the MO 1 is an NTN MO.

In this embodiment, the plurality of MOs configured by the network device for the terminal device include at least a first-type MO and a second-type MO. The first-type MO in the plurality of MOs includes an MO corresponding to conditional handover CHO and/or an MO corresponding to conditional PSCell addition/change CPAC, and the second-type MO is an MO other than the first-type MO in the plurality of MOs.

Specifically, the measurement configuration includes the plurality of measurement objects MOs, and further includes fields such as a report configuration (report configuration, ReportConfig), a measurement identifier (measurement ID, measId), and a measurement quantity configuration (measurement quantity configuration, QuantityConfig). This is not specifically described herein.

In addition, the conditional configuration is used to configure at least one conditional event for triggering conditional handover CHO and/or conditional PSCell addition/change CPAC. Generally, the measurement configuration and the conditional configuration may be associated with each other by using a measurement identifier. To be specific, if a measurement identifier of an MO in the measurement configuration corresponds to a conditional event in the conditional configuration, the MO is the first-type MO.

In this embodiment, the conditional event indicated by the conditional configuration includes a common conditional event, a time-based conditional event, a location-based conditional event, and the like. A standard for determining the common conditional event is a measurement quantity (for example, reference signal received power (reference signal received power, RSRP) or reference signal received quality (reference signal received quality, RSRQ)), without considering time or geographical location. For example, when the measurement quantity reaches a threshold, the terminal device may determine that the common conditional event is met. The time-based conditional event means that the terminal device needs to start to determine, at a specific time, whether a measurement quantity (for example, RSRP or RSRQ) reaches a threshold. The location-based conditional event means that the terminal device needs to start to determine, after moving to a geographical location (for example, a longitude and latitude location), whether a measurement quantity (for example, RSRP or RSRQ) reaches a threshold.

Optionally, the time-based conditional event and the location-based conditional event that are indicated by the conditional configuration in this embodiment may be determined by the network device based on ephemeris information of a satellite. Specifically, the network device may determine, based on the ephemeris information of the satellite, a specific geographical location covered by an NTN cell within a time range, and then the network device determines the foregoing conditional configuration based on the time range and the geographical location, to configure, for the NTN cell, a conditional event for triggering conditional handover CHO and/or conditional PSCell addition/change CPAC.

Step 302: When the conditional event includes a time-based conditional event or a location-based conditional event, and an applicable cell corresponding to the conditional configuration meets the time-based conditional event or the location-based conditional event, the terminal device measures a target MO in the first-type MO, where the target MO is an MO in the first-type MO including the applicable cell corresponding to the conditional configuration.

For example, in an example, the terminal device may measure only the target MO in the first-type MO, and does not measure another first-type MO (for example, an MO with no time-based conditional event configured for the applicable cell; or an MO with no location-based conditional event configured for the applicable cell; or an MO with a time-based conditional event configured for the applicable cell while the time-based conditional event not met by the applicable cell; or an MO with a location-based conditional event configured for the applicable cell while the location-based conditional event not met by the applicable cell, and the like), and the terminal device measures the second-type MO based on the measurement configuration. In another example, the terminal device measures only the target MO in all the MOs, and does not measure another first-type MO and another second-type MO.

In this embodiment, the applicable cell configured with the time-based conditional event and the applicable cell configured with the location-based conditional event may need to be preferentially measured compared with an applicable cell configured with only a normal conditional event. Therefore, after the terminal device receives the measurement configuration and the conditional configuration, the terminal device determines whether the conditional event configured by the network device includes the time-based conditional event or the location-based conditional event. In other words, the terminal device needs to first determine whether the time-based conditional event or the location-based conditional event is configured for the applicable cell in the first-type MO. When the applicable cell in the first-type MO meets the time-based conditional event or location-based conditional event, the terminal device measures only an MO (for ease of description, referred to as a target MO below) in which the applicable cell that meets the foregoing time-based conditional event or location-based conditional event is located. This helps ensure measurement of the MO in which the cell for which the time-based conditional event is configured is located, and helps shorten triggering of the terminal device for conditional handover CHO and/or conditional PSCell addition/change CPAC.

It should be understood that, in the conventional technology, the network device may indicate the time-based conditional event or the location-based conditional event in the conditional configuration for the NTN MO, and generally does not indicate the time-based conditional event or the location-based conditional event in the conditional configuration for the NTN MO. However, with development of communication technologies, a case in which the network device may also indicate the time-based conditional event or the location-based conditional event in the conditional configuration for the TN MO is not excluded. Therefore, the first-type MO in this embodiment may be an NTN MO or a TN MO.

In a possible implementation, the first-type MO is an NTN MO, and in this case, the target MO is also an NTN MO. In this case, the terminal device measures an MO, in the first-type MO in the NTN, of an applicable cell that meets a time-based conditional event or a location-based conditional event; and does not measure an MO of another type (for example, the second-type MO (including a second-type MO in the NTN and a second-type MO in a TN)), or an MO of an applicable cell that does not meet a time-based conditional event, or an MO of an applicable cell that does not meet a location-based conditional event.

It should be understood that the terminal device uses the solution provided in this implementation only for the NTN MO, and the solution provided in this implementation is not applicable to the TN MO. In a possible implementation, the measurement configuration received by the terminal device from the network device includes an NTN MO and a TN MO, and the NTN MO includes the first-type MO and the second-type MO. The terminal device measures only the target MO in the NTN MO (that is, the NTN MO includes the first-type MO including the applicable cell corresponding to the conditional configuration), and does not measure another first-type MO in the NTN and another second-type MO in the NTN. The terminal device measures the TN MO (including the first-type MO in the TN and the second-type MO in the TN) based on the measurement configuration.

Further, the target MO may be associated with a plurality of synchronization signal block measurement timing configuration (SSB measurement timing configuration, SMTC) windows. The terminal device may measure the target MO only in a first SMTC window, where the first SMTC window is an SMTC window in which the applicable cell corresponding to the conditional configuration is located. When the target MO configuration includes configurations of a plurality of SMTC windows, each SMTC window is associated with one cell list, and the terminal device measures a cell in an associated list in a specific SMTC window. It may be understood that when the target MO configuration includes configurations of a plurality of SMTC windows, an applicable cell corresponding to a conditional configuration is in only a cell list associated with one SMTC window. In this implementation, the terminal device performs measurement only in an SMTC window in which the cell is located.

The solution provided in this embodiment may be used in an NTN scenario. In the NTN scenario, the network device may determine, based on ephemeris information of a satellite, a specific geographical location covered by an NTN cell within a time range, and then the network device determines the foregoing conditional configuration (that is, a conditional configuration of a conditional event for triggering conditional handover CHO and/or conditional PSCell addition/change CPAC) based on the time range and the geographical location. When the time-based conditional event or the location-based conditional event is met, the terminal device is usually closer to an applicable cell (applicable cell) corresponding to the foregoing conditional configuration. Therefore, in this embodiment, the terminal device preferentially ensures measurement of the MO in which the applicable cell corresponding to the conditional configuration is located, to quickly trigger conditional handover CHO and/or conditional PSCell addition/change CPAC.

Optionally, the terminal device may stop measuring another SMTC window in the another NTN MO or the target NTN MO, so that times for serving cell data interruption caused by measuring timing of different NTN neighboring cells can be reduced. In addition, when the time-based conditional event or the location-based conditional event is met, the terminal device usually does not perform measurement in coverage of another NTN cell. Therefore, stopping measurement on the another NTN cell generally does not pose negative impact on mobility.

FIG. 4 is a schematic diagram of a structure of a communication apparatus 40 according to an embodiment. It should be understood that the terminal device in the method embodiment corresponding to FIG. 1, FIG. 2, or FIG. 3 may be based on the structure of the communication apparatus 40 shown in FIG. 1, FIG. 2, or FIG. 3 in this embodiment.

The communication apparatus 40 includes at least one processor 401, at least one memory 402, and at least one transceiver 403. The processor 401, the memory 402, and the transceiver 403 are connected to each other. Optionally, the communication apparatus 40 may further include an input device 405, an output device 406, and one or more antennas 404. The antenna 404 is connected to the transceiver 403, and the input device 405 and the output device 406 are connected to the processor 401.

In this embodiment, the memory 402 is mainly configured to store a software program and data. The memory 402 may exist independently, and is connected to the processor 401. Optionally, the memory 402 may be integrated with the processor 401, for example, integrated into one or more chips. The memory 402 can store program code for performing the technical solutions in embodiments of this application, and the processor 401 controls the execution. Various types of executed computer program code may also be considered as drivers of the processor 401. It should be understood that FIG. 4 in this embodiment shows only one memory and one processor. However, during actual application, the communication apparatus 40 may include a plurality of processors or a plurality of memories. This is not specifically limited herein. In addition, the memory 402 may also be referred to as a storage medium, a storage device, or the like. The memory 402 may be a storage element (that is, an on-chip storage element) located on the same chip as the processor, or an independent storage element. This is not limited in this embodiment of this application.

In this embodiment, the transceiver 403 may be configured to support receiving or sending of a radio frequency signal between the communication apparatus 40 and an access network device, and the transceiver 403 may be connected to the antenna 404. The transceiver 403 includes a transmitter Tx and a receiver Rx. Specifically, the one or more antennas 404 may receive a radio frequency signal. The receiver Rx in the transceiver 403 is configured to: receive the radio frequency signal from the antenna 404, convert the radio frequency signal into a digital baseband signal or a digital intermediate frequency signal, and provide the digital baseband signal or the digital intermediate frequency signal for the processor 401, to enable the processor 401 to perform further processing, for example, demodulation processing and decoding processing, on the digital baseband signal or the digital intermediate frequency signal. In addition, the transmitter Tx in the transceiver 403 is further configured to: receive a modulated digital baseband signal or a modulated digital intermediate frequency signal from the processor 401, convert the modulated digital baseband signal or the modulated digital intermediate frequency signal into a radio frequency signal, and transmit the radio frequency signal through the one or more antennas 404. Specifically, the receiver Rx may selectively perform one-level or multi-level frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one-level or multi-level frequency up-mixing processing and digital-to-analog conversion processing on the modulated digital baseband signal or the modulated digital medium-frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 403 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input interface, a receiving circuit, or the like; and the sending unit may be referred to as a transmitter machine, a transmitter, a transmitter circuit, or the like.

The processor 401 may be a baseband processor, or may be a central processing unit (central processing unit, CPU). The baseband processor and the CPU may be integrated together or separated from each other. The processor 401 may be configured to implement various functions for the terminal device, for example, configured to process a communication protocol and communication data; or configured to: control the whole terminal device, execute a software program, and process data of the software program; or configured to assist in completing a computing processing task, for example, graphics and image processing or audio processing. Alternatively, the processor 401 is configured to implement one or more of the foregoing functions.

In addition, the output device 406 communicates with the processor 401, and may display information in a plurality of manners. This is not specifically limited herein.

In a possible implementation, the communication apparatus 40 is configured to perform the method in the embodiment corresponding to FIG. 1, FIG. 2, or FIG. 3. In this case, the processor 401 in the communication apparatus 40 is configured to control the transceiver 403 to receive a measurement configuration. The measurement configuration is used to configure a plurality of measurement objects MOs, where the plurality of MOs include a first-type MO and a second-type MO, the first-type MO includes an MO corresponding to conditional handover CHO and/or an MO corresponding to conditional PSCell addition/change CPAC, and the second-type MO is an MO other than the first-type MO in the plurality of MOs.

In addition, in the embodiment corresponding to FIG. 1, the processor 401 in the communication apparatus 40 is further configured to identify and analyze the measurement configuration, to determine whether the measurement configuration includes first indication information. When the measurement configuration includes the first indication information, the processor 401 separately determines a measurement parameter of a first group of MOs and a measurement parameter of a second group of MOs. The first group of MOs includes only the first-type MO in the plurality of MOs, the second group of MOs includes the second-type MO, and the first indication information indicates the terminal device to determine a measurement parameter based on a type of an MO. In addition, the processor 401 further measures the first group of MOs based on the measurement parameter of the first group of MOs, and measures the second group of MOs based on the measurement parameter of the second group of MOs.

Optionally, the measurement parameter of the first group of MOs is used to determine measurement duration for measuring any MO in the first group of MOs, and the measurement parameter of the second group of MOs is used to determine measurement duration for measuring any MO in the second group of MOs.

Optionally, the measurement parameter of the first group of MOs includes a first controlling factor, and the measurement parameter of the second group of MOs includes a second controlling factor. The first controlling factor is a multiplier used to calculate the measurement duration of the any MO in the first group of MOs, and the second controlling factor is a multiplier used to calculate the measurement duration of the any MO in the second group of MOs.

Optionally, the first indication information includes a first scaling factor, a difference between 1 and the first scaling factor is a second scaling factor, the first scaling factor is used to calculate the first controlling factor, and the second scaling factor is used to calculate the second controlling factor.

In a possible implementation, when the first group of MOs and the second group of MOs are MOs measured outside a measurement gap, the processor 401 is specifically configured to determine the first controlling factor and the second controlling factor based on a third scaling factor, where the third scaling factor is a preset scaling factor, or the third scaling factor is a scaling factor determined by the terminal device based on a quantity of first-type MOs and/or a total quantity of MOs configured by the terminal device.

In a possible implementation, when the first group of MOs and the second group of MOs are MOs measured within a measurement gap, the processor 401 is specifically configured to determine the first controlling factor and the second controlling factor based on a fourth scaling factor, where the fourth scaling factor is an existing configured scaling factor, and the existing configured scaling factor is a scaling factor that is configured by a network device for the terminal device and that is used to determine a measurement parameter of an intra-frequency MO; or the fourth scaling factor is a preset scaling factor; or the fourth scaling factor is a scaling factor determined by the terminal device based on a quantity of first-type MOs and/or a total quantity of MOs configured by the terminal device.

In a possible implementation, when the first group of MOs and the second group of MOs are MOs measured outside a measurement gap, the processor 401 is specifically configured to: determine the first controlling factor based on a quantity of MOs in the first group of MOs and at least one of an MO of a primary component carrier PCC and an MO of a primary secondary component carrier PSCC; and determine the second controlling factor based on a quantity of MOs in the second group of MOs.

In a possible implementation, the processor 401 is specifically configured to: determine measurement duration of each MO in the first group of MOs based on the measurement parameter of the first group of MOs and initial measurement duration of each MO in the first group of MOs, and measure an MO corresponding to the measurement duration based on the measurement duration of each MO in the first group of MOs; and determine, by the terminal device, the measurement duration of each MO in the second group of MOs based on the measurement parameter of the second group of MOs and initial measurement duration of each MO in the second group of MOs, and measure an MO corresponding to the measurement duration based on the measurement duration of each MO in the second group of MOs, where the initial measurement duration is duration that is predefined in a protocol and that is used when the terminal device measures only one MO.

In addition, in the embodiment corresponding to FIG. 2, the processor 401 in the communication apparatus 40 is further configured to identify whether the plurality of MOs indicated by the measurement configuration include at least one first-type MO that operates on a same frequency as a serving cell, and if an applicable cell corresponding to a conditional configuration in the first-type MO that operates on a same frequency as the serving cell is a neighboring cell, the processor 401 measures the applicable cell corresponding to the conditional configuration in the first-type MO that operates on a same frequency as the serving cell.

In an optional implementation, when a frequency band in which the first-type MO that operates on a same frequency as the serving cell is located does not include a primary component carrier PCC and a primary secondary component carrier PSCC, the processor 401 is further configured to measure all neighboring cells in one of the at least one first-type MO that operates on a same frequency as the serving cell.

In an optional implementation, when a frequency band in which the first-type MO that operates on a same frequency as the serving cell is located includes a primary component carrier PCC and/or a primary secondary component carrier PSCC, the processor 401 is further configured to measure all neighboring cells in an MO of the primary component carrier PCC and/or an MO of the primary secondary component carrier PSCC.

In addition, in the embodiment corresponding to FIG. 3, the processor 401 in the communication apparatus 40 is further configured to analyze a conditional configuration sent by the network device. When the conditional event includes a time-based conditional event or a location-based conditional event, and an applicable cell corresponding to the conditional configuration meets the time-based conditional event or the location-based conditional event, the processor 401 measures only a target MO in the first-type MO, where the target MO is an MO in the first-type MO including the applicable cell corresponding to the conditional configuration.

In a possible implementation, if the target MO is associated with a plurality of synchronization signal block measurement timing configuration SMTC windows, the processor 401 measures the target MO only in a first SMTC window, where the first SMTC window is an SMTC window in which the applicable cell corresponding to the conditional configuration is located. Optionally, the first-type MO is an MO in a non-terrestrial network NTN.

For other parts, refer to the method of the terminal device in the foregoing embodiment. Details are not described herein again.

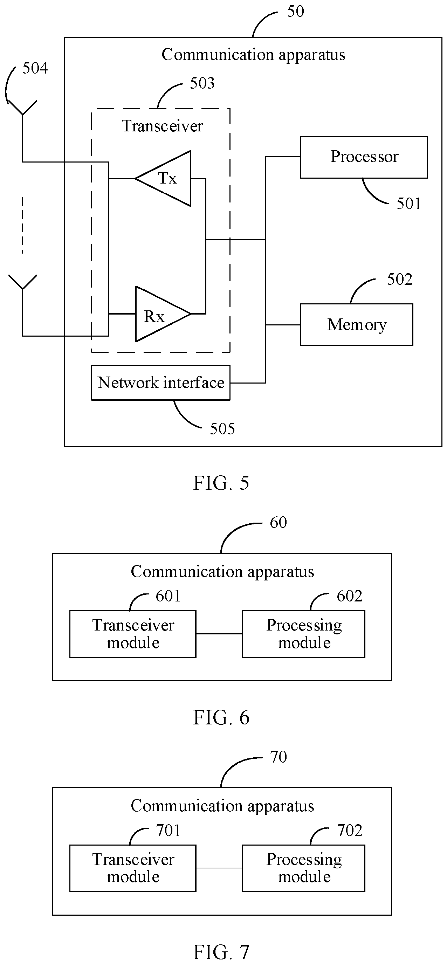

FIG. 5 is a schematic diagram of a structure of another communication apparatus 50 according to an embodiment. It should be understood that the network device in the method embodiment corresponding to FIG. 1, FIG. 2, or FIG. 3 may be based on the structure of the communication apparatus 50 shown in FIG. 5 in this embodiment. It should be further understood that, when a network device (for example, an access network device or a base station) of a subsequent evolved standard performs the method in embodiments of this application, the network device (for example, an access network device or a base station) of the subsequent evolved standard may also use the structure of the communication apparatus 50 shown in FIG. 5 in this embodiment.

The communication apparatus 50 includes at least one processor 501, at least one memory 502, at least one transceiver 503, at least one network interface 505, and one or more antennas 504. The processor 501, the memory 502, the transceiver 503, and the network interface 505 are connected by using a connection apparatus, and the antenna 504 is connected to the transceiver 503. The connection apparatus may include various types of interfaces, transmission cables, buses, or the like. This is not limited in this embodiment.

The memory 502 is mainly configured to store a software program and data. The memory 502 may exist independently, and is connected to the processor 501. Optionally, the memory 502 may be integrated with the processor 501, for example, integrated into one or more chips. The memory 502 can store program code for performing the technical solutions in embodiments of this application, and the processor 501 controls the execution. Various types of executed computer program code may also be considered as drivers of the processor 501. It should be understood that FIG. 5 in this embodiment shows only one memory and one processor. However, during actual application, the communication apparatus 50 may include a plurality of processors or a plurality of memories. This is not specifically limited herein. In addition, the memory 502 may also be referred to as a storage medium, a storage device, or the like. The memory 502 may be a storage element (that is, an on-chip storage element) located on the same chip as the processor, or an independent storage element. This is not limited in this embodiment of this application.

In this embodiment, the transceiver 503 may be configured to support receiving or sending of a radio frequency signal between the communication apparatus 50 and a terminal device, and the transceiver 503 may be connected to the antenna 504. The transceiver 503 includes a transmitter Tx and a receiver Rx. Specifically, the one or more antennas 504 may receive a radio frequency signal. The receiver Rx in the transceiver 503 is configured to: receive the radio frequency signal from the antenna 504, convert the radio frequency signal into a digital baseband signal or a digital intermediate frequency signal, and provide the digital baseband signal or the digital intermediate frequency signal for the processor 501, to enable the processor 501 to perform further processing, for example, demodulation processing and decoding processing, on the digital baseband signal or the digital intermediate frequency signal. In addition, the transmitter Tx in the transceiver 503 is further configured to: receive a modulated digital baseband signal or a modulated digital intermediate frequency signal from the processor 501, convert the modulated digital baseband signal or the modulated digital intermediate frequency signal into a radio frequency signal, and transmit the radio frequency signal through the one or more antennas 504. Specifically, the receiver Rx may selectively perform one-level or multi-level frequency down-mixing processing and analog-to-digital conversion processing on the radio frequency signal to obtain the digital baseband signal or the digital intermediate frequency signal. A sequence of the frequency down-mixing and the analog-to-digital conversion processing is adjustable. The transmitter Tx may selectively perform one-level or multi-level frequency up-mixing processing and digital-to-analog conversion processing on the modulated digital baseband signal or digital medium-frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

It should be understood that the transceiver 503 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input interface, a receiving circuit, or the like; and the sending unit may be referred to as a transmitter machine, a transmitter, a transmitter circuit, or the like.

In addition, the processor 501 is mainly configured to process a communication protocol and communication data, control the whole network device, execute a software program, and process data of the software program, for example, configured to support the communication apparatus 50 in performing an action described in the foregoing embodiment. The communication apparatus 50 may include a baseband processor and a central processing unit. The baseband processor is mainly configured to process a communication protocol and communication data. The central processing unit is mainly configured to control the whole communication apparatus 50, execute a software program, and process data of the software program. Functions of the baseband processor and the central processing unit may be integrated into the processor 501 in FIG. 5. Persons skilled in the art may understand that the baseband processor and the central processing unit may alternatively be processors independent of each other, and are interconnected by using a technology such as a bus. Persons skilled in the art may understand that the communication apparatus 50 may include a plurality of baseband processors to adapt to different network standards, the communication apparatus 50 may include a plurality of central processing units to enhance a processing capability of the communication apparatus 50, and components in the communication apparatus 50 may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In addition, the network interface 505 is configured to enable the communication apparatus 50 to connect to another communication apparatus through a communication link. Specifically, the network interface 505 may include a network interface between the communication apparatus 50 and a core network element, for example, an S1 interface. Alternatively, the network interface 505 may include a network interface between the communication apparatus 50 and another network device (for example, another access network device or another core network element), for example, an X2 interface or an Xn interface.

In a possible implementation, the communication apparatus 50 is configured to perform the method in the embodiment corresponding to FIG. 1, FIG. 2, or FIG. 3. Specifically, in the communication apparatus 50, the processor 501 is configured to control the transceiver 503 to send a measurement configuration to a terminal device, where the measurement configuration is used to configure a plurality of measurement objects MOs, the plurality of MOs include a first-type MO and a second-type MO, the measurement configuration includes first indication information, and the first indication information indicates the terminal device to determine a measurement parameter based on a type of an MO, so that the terminal device separately measures a first group of MOs based on a measurement parameter of the first group of MOs, and measures a second group of MOs based on a measurement parameter of the second group of MOs.

The first-type MO includes an MO corresponding to conditional handover CHO and/or an MO corresponding to conditional PSCell addition/change CPAC, the second-type MO is an MO other than the first-type MO in the plurality of MOs, the first group of MOs includes only the first-type MO in the plurality of MOs, and the second group of MOs includes the second-type MO.

Optionally, the measurement parameter of the first group of MOs is used to determine measurement duration for measuring any MO in the first group of MOs, and the measurement parameter of the second group of MOs is used to determine measurement duration for measuring any MO in the second group of MOs.

Optionally, the measurement parameter of the first group of MOs includes a first controlling factor, and the measurement parameter of the second group of MOs includes a second controlling factor.

The first controlling factor is a multiplier used to calculate the measurement duration of the any MO in the first group of MOs, and the second controlling factor is a multiplier used to calculate the measurement duration of the any MO in the second group of MOs.

Optionally, the first indication information includes a first scaling factor, a difference between 1 and the first scaling factor is a second scaling factor, the first scaling factor is used to calculate the first controlling factor, and the second scaling factor is used to calculate the second controlling factor.

For other methods, refer to the method of the network device in the foregoing embodiment. Details are not described herein again.

As shown in FIG. 6, this application further provides another communication apparatus 60. The communication apparatus 60 may be a terminal device or a chip in a terminal device. The communication apparatus 60 includes a transceiver module 601 and a processing module 602.

In a possible implementation, the communication apparatus 60 is configured to perform the method in the embodiment corresponding to FIG. 1, FIG. 2, or FIG. 3. In this case, the transceiver module 601 in the communication apparatus 60 is configured to receive a measurement configuration. The measurement configuration is used to configure a plurality of measurement objects MOs, where the plurality of MOs include a first-type MO and a second-type MO, the first-type MO includes an MO corresponding to conditional handover CHO and/or an MO corresponding to conditional PSCell addition/change CPAC, and the second-type MO is an MO other than the first-type MO in the plurality of MOs.

In addition, in the embodiment corresponding to FIG. 1, the processing module 602 in the communication apparatus 60 is configured to identify and analyze the measurement configuration, to determine whether the measurement configuration includes first indication information. When the measurement configuration includes the first indication information, the processing module 602 separately determines a measurement parameter of a first group of MOs and a measurement parameter of a second group of MOs. The first group of MOs includes only the first-type MO in the plurality of MOs, the second group of MOs includes the second-type MO, and the first indication information indicates the terminal device to determine a measurement parameter based on a type of an MO. In addition, the processing module 602 further measures the first group of MOs based on the measurement parameter of the first group of MOs, and measures the second group of MOs based on the measurement parameter of the second group of MOs.

Optionally, the measurement parameter of the first group of MOs is used to determine measurement duration for measuring any MO in the first group of MOs, and the measurement parameter of the second group of MOs is used to determine measurement duration for measuring any MO in the second group of MOs.

Optionally, the measurement parameter of the first group of MOs includes a first controlling factor, and the measurement parameter of the second group of MOs includes a second controlling factor. The first controlling factor is a multiplier used to calculate the measurement duration of the any MO in the first group of MOs, and the second controlling factor is a multiplier used to calculate the measurement duration of the any MO in the second group of MOs.

Optionally, the first indication information includes a first scaling factor, a difference between 1 and the first scaling factor is a second scaling factor, the first scaling factor is used to calculate the first controlling factor, and the second scaling factor is used to calculate the second controlling factor.

In a possible implementation, when the first group of MOs and the second group of MOs are MOs measured outside a measurement gap, the processing module 602 is specifically configured to determine the first controlling factor and the second controlling factor based on a third scaling factor, where the third scaling factor is a preset scaling factor, or the third scaling factor is a scaling factor determined by the terminal device based on a quantity of first-type MOs and/or a total quantity of MOs configured by the terminal device.

In a possible implementation, when the first group of MOs and the second group of MOs are MOs measured within a measurement gap, the processing module 602 is specifically configured to determine the first controlling factor and the second controlling factor based on a fourth scaling factor, where the fourth scaling factor is an existing configured scaling factor, and the existing configured scaling factor is a scaling factor that is configured by a network device for the terminal device and that is used to determine a measurement parameter of an intra-frequency MO; or the fourth scaling factor is a preset scaling factor; or the fourth scaling factor is a scaling factor determined by the terminal device based on a quantity of first-type MOs and/or a total quantity of MOs configured by the terminal device.

In a possible implementation, when the first group of MOs and the second group of MOs are MOs measured outside a measurement gap, the processing module 602 is specifically configured to: determine the first controlling factor based on a quantity of MOs in the first group of MOs and at least one of an MO of a primary component carrier PCC and an MO of a primary secondary component carrier PSCC; and determine the second controlling factor based on a quantity of MOs in the second group of MOs.

In a possible implementation, the processing module 602 is specifically configured to: determine measurement duration of each MO in the first group of MOs based on the measurement parameter of the first group of MOs and initial measurement duration of each MO in the first group of MOs, and measure an MO corresponding to the measurement duration based on the measurement duration of each MO in the first group of MOs; and determine, by the terminal device, the measurement duration of each MO in the second group of MOs based on the measurement parameter of the second group of MOs and initial measurement duration of each MO in the second group of MOs, and measure an MO corresponding to the measurement duration based on the measurement duration of each MO in the second group of MOs, where the initial measurement duration is duration that is predefined in a protocol and that is used when the terminal device measures only one MO.

In addition, in the embodiment corresponding to FIG. 2, the processing module 602 in the communication apparatus 60 is further configured to identify whether the plurality of MOs indicated by the measurement configuration include at least one first-type MO that operates on a same frequency as a serving cell, and if an applicable cell corresponding to a conditional configuration in the first-type MO that operates on a same frequency as the serving cell is a neighboring cell, the processing module 602 measures the applicable cell corresponding to the conditional configuration in the first-type MO that operates on a same frequency as the serving cell.

In an optional implementation, when a frequency band in which the first-type MO that operates on a same frequency as the serving cell is located does not include a primary component carrier PCC and a primary secondary component carrier PSCC, the processing module 602 is further configured to measure all neighboring cells in one of the at least one first-type MO that operates on a same frequency as the serving cell.

In an optional implementation, when a frequency band in which the first-type MO that operates on a same frequency as the serving cell is located includes a primary component carrier PCC and/or a primary secondary component carrier PSCC, the processing module 602 is further configured to measure all neighboring cells in an MO of the primary component carrier PCC and/or an MO of the primary secondary component carrier PSCC.

In addition, in the embodiment corresponding to FIG. 3, the processing module 602 in the communication apparatus 60 is further configured to analyze a conditional configuration sent by the network device. When the conditional event includes a time-based conditional event or a location-based conditional event, and an applicable cell corresponding to the conditional configuration meets the time-based conditional event or the location-based conditional event, the processing module 602 measures only a target MO in the first-type MO, where the target MO is an MO in the first-type MO including the applicable cell corresponding to the conditional configuration.

In a possible implementation, if the target MO is associated with a plurality of synchronization signal block measurement timing configuration SMTC windows, the processing module 602 measures the target MO only in a first SMTC window, where the first SMTC window is an SMTC window in which the applicable cell corresponding to the conditional configuration is located. Optionally, the first-type MO is an MO in a non-terrestrial network NTN.

For other parts, refer to the method of the terminal device in the foregoing embodiment. Details are not described herein again.

As shown in FIG. 7, this application further provides another communication apparatus 70. The communication apparatus 70 may be a network device or a chip in a network device. Optionally, the network device is an access network device. The communication apparatus 70 includes a transceiver module 701 and a processing module 702.

In a possible implementation, the communication apparatus 70 is configured to perform the method in the embodiment corresponding to FIG. 1, FIG. 2, or FIG. 3. Specifically, in the communication apparatus 70, the processing module 702 is configured to determine a measurement configuration and a conditional configuration. The processing module 702 is configured to send the measurement configuration to a terminal device, where the measurement configuration is used to configure a plurality of measurement objects MOs, the plurality of MOs include a first-type MO and a second-type MO, the measurement configuration includes first indication information, and the first indication information indicates the terminal device to determine a measurement parameter based on a type of an MO, so that the terminal device separately measures a first group of MOs based on a measurement parameter of the first group of MOs, and measures a second group of MOs based on a measurement parameter of the second group of MOs.

The first-type MO includes an MO corresponding to conditional handover CHO and/or an MO corresponding to conditional PSCell addition/change CPAC, the second-type MO is an MO other than the first-type MO in the plurality of MOs, the first group of MOs includes only the first-type MO in the plurality of MOs, and the second group of MOs includes the second-type MO.

Optionally, the measurement parameter of the first group of MOs is used to determine measurement duration for measuring any MO in the first group of MOs, and the measurement parameter of the second group of MOs is used to determine measurement duration for measuring any MO in the second group of MOs.

Optionally, the measurement parameter of the first group of MOs includes a first controlling factor, and the measurement parameter of the second group of MOs includes a second controlling factor.

The first controlling factor is a multiplier used to calculate the measurement duration of the any MO in the first group of MOs, and the second controlling factor is a multiplier used to calculate the measurement duration of the any MO in the second group of MOs.

Optionally, the first indication information includes a first scaling factor, a difference between 1 and the first scaling factor is a second scaling factor, the first scaling factor is used to calculate the first controlling factor, and the second scaling factor is used to calculate the second controlling factor.

For other methods, refer to the method of the network device in the foregoing embodiment. Details are not described herein again.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again. It should be further understood that, "first", "second", "third", "fourth", and various numbers in this specification are merely used for differentiation for ease of description, and are not intended to limit the scope of embodiments of this application.

In addition, this application provides a computer program product. The computer program product includes one or more computer instructions. When the computer program instructions are loaded and executed on a computer, all or some of the procedures or functions according to embodiments of this application are generated. For example, the method related to the network device in FIG. 1, FIG. 2, or FIG. 3 is implemented. For another example, the method related to the terminal device in FIG. 1, FIG. 2, or FIG. 3 is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the terminal device in FIG. 1, FIG. 2, or FIG. 3.

In addition, this application further provides a computer-readable storage medium. The storage medium stores a computer program, and the computer program is executed by a processor to implement the method related to the network device in FIG. 1, FIG. 2, or FIG. 3.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

The foregoing embodiments are merely intended to describe the technical solutions of this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1.  A measurement method, comprising:

    receiving, by a terminal device, a measurement configuration, wherein the measurement configuration is used to configure a plurality of measurement objects MOs, the plurality of MOs comprise a first-type MO and a second-type MO, the first-type MO comprises an MO corresponding to conditional handover CHO and/or an MO corresponding to conditional PSCell addition/change CPAC, and the second-type MO is an MO other than the first-type MO in the plurality of MOs;
    when the measurement configuration comprises first indication information, determining, by the terminal device, a measurement parameter of a first group of MOs and a measurement parameter of a second group of MOs, wherein the first group of MOs comprises only the first-type MO in the plurality of MOs, the second group of MOs comprises the second-type MO, and the first indication information indicates the terminal device to determine a measurement parameter based on a type of an MO; and
    measuring, by the terminal device, the first group of MOs based on the measurement parameter of the first group of MOs, and measuring the second group of MOs based on the measurement parameter of the second group of MOs.

2.  The method according to claim 1, wherein the measurement parameter of the first group of MOs is used to determine measurement duration for measuring any MO in the first group of MOs, and the measurement parameter of the second group of MOs is used to determine measurement duration for measuring any MO in the second group of MOs.

3.  The method according to claim 2, wherein the measurement parameter of the first group of MOs comprises a first controlling factor, and the measurement parameter of the second group of MOs comprises a second controlling factor; and
    the first controlling factor is a multiplier used to calculate the measurement duration of the any MO in the first group of MOs, and the second controlling factor is a multiplier used to calculate the measurement duration of the any MO in the second group of MOs.

4.  The method according to claim 3, wherein the first indication information comprises a first scaling factor, a difference between 1 and the first scaling factor is a second scaling factor, the first scaling factor is used to calculate the first controlling factor, and the second scaling factor is used to calculate the second controlling factor.

5.  The method according to claim 3, wherein when the first group of MOs and the second group of MOs are MOs measured outside a measurement gap, the determining, by the terminal device, a measurement parameter of a first group of MOs and a measurement parameter of a second group of MOs comprises:

    determining, by the terminal device, the first controlling factor and the second controlling factor based on a third scaling factor, wherein
    the third scaling factor is a preset scaling factor, or the third scaling factor is a scaling factor determined by the terminal device based on a quantity of first-type MOs and/or a total quantity of MOs configured by the terminal device.

6.  The method according to claim 3, wherein when the first group of MOs and the second group of MOs are MOs measured within a measurement gap, the determining, by the terminal device, a measurement parameter of a first group of MOs and a measurement parameter of a second group of MOs comprises:

    determining, by the terminal device, the first controlling factor and the second controlling factor based on a fourth scaling factor, wherein
    the fourth scaling factor is an existing configured scaling factor, and the existing configured scaling factor is a scaling factor that is configured by a network device for the terminal device and that is used to determine a measurement parameter of an intra-frequency MO; or the fourth scaling factor is a preset scaling factor; or the fourth scaling factor is a scaling factor determined by the terminal device based on a quantity of first-type MOs and/or a total quantity of MOs configured by the terminal device.

7.  The method according to claim 3, wherein when the first group of MOs and the second group of MOs are MOs measured outside a measurement gap, the determining, by the terminal device, a measurement parameter of a first group of MOs and a measurement parameter of a second group of MOs comprises:

    determining, by the terminal device, the first controlling factor based on a quantity of MOs in the first group of MOs and at least one of an MO of a primary component carrier PCC and an MO of a primary secondary component carrier PSCC; and
    determining, by the terminal device, the second controlling factor based on a quantity of MOs in the second group of MOs.

8.  The method according to any one of claims 3 to 7, wherein
    the measuring, by the terminal device, the first group of MOs based on the measurement parameter of the first group of MOs comprises:

    determining, by the terminal device, measurement duration of each MO in the first group of MOs based on the measurement parameter of the first group of MOs and initial measurement duration of each MO in the first group of MOs, and measuring an MO corresponding to the measurement duration based on the measurement duration of each MO in the first group of MOs; and
    the measuring, by the terminal device, the second group of MOs based on the measurement parameter of the second group of MOs comprises:

        determining, by the terminal device, measurement duration of each MO in the second group of MOs based on the measurement parameter of the second group of MOs and initial measurement duration of each MO in the second group of MOs, and measuring an MO corresponding to the measurement duration based on the measurement duration of each MO in the second group of MOs, wherein
        the initial measurement duration is duration that is predefined in a protocol and that is used when the terminal device measures only one MO.

9.  A measurement configuration method, comprising:

    sending, by a network device, a measurement configuration to a terminal device, wherein the measurement configuration is used to configure a plurality of measurement objects MOs, the plurality of MOs comprise a first-type MO and a second-type MO, the measurement configuration comprises first indication information, and the first indication information indicates the terminal device to determine a measurement parameter based on a type of an MO, so that the terminal device separately measures a first group of MOs based on a measurement parameter of the first group of MOs, and measures a second group of MOs based on a measurement parameter of the second group of MOs, wherein
    the first-type MO comprises an MO corresponding to conditional handover CHO and/or an MO corresponding to conditional PSCell addition/change CPAC, the second-type MO is an MO other than the first-type MO in the plurality of MOs, the first group of MOs comprises only the first-type MO in the plurality of MOs, and the second group of MOs comprises the second-type MO.

10. The method according to claim 9, wherein the measurement parameter of the first group of MOs is used to determine measurement duration for measuring any MO in the first group of MOs, and the measurement parameter of the second group of MOs is used to determine measurement duration for measuring any MO in the second group of MOs.

11. The method according to claim 10, wherein the measurement parameter of the first group of MOs comprises a first controlling factor, and the measurement parameter of the second group of MOs comprises a second controlling factor; and
    the first controlling factor is a multiplier used to calculate the measurement duration of the any MO in the first group of MOs, and the second controlling factor is a multiplier used to calculate the measurement duration of the any MO in the second group of MOs.

12. The method according to claim 11, wherein the first indication information comprises a first scaling factor, a difference between 1 and the first scaling factor is a second scaling factor, the first scaling factor is used to calculate the first controlling factor, and the second scaling factor is used to calculate the second controlling factor.

13. A measurement method, comprising:

receiving, by a terminal device, a measurement configuration, wherein the measurement configuration is used to configure a plurality of measurement objects MOs, the plurality of MOs comprise at least one first-type MO that operates on a same frequency as a serving cell, and the first-type MO comprises an MO corresponding to conditional handover CHO and/or an MO corresponding to conditional PSCell addition/change CPAC; and
if an applicable cell corresponding to a conditional configuration in the first-type MO that operates on a same frequency as the serving cell is a neighboring cell, measuring, by the terminal device, the applicable cell corresponding to the conditional configuration in the first-type MO that operates on a same frequency as the serving cell.

14. The method according to claim 13, wherein when a frequency band in which the first-type MO that operates on a same frequency as the serving cell is located does not comprise a primary component carrier PCC and a primary secondary component carrier PSCC, the method further comprises:
measuring, by the terminal device, all neighboring cells in one of the at least one first-type MO that operates on a same frequency as the serving cell.

15. The method according to claim 13, when a frequency band in which the first-type MO that operates on a same frequency as the serving cell is located comprises a primary component carrier PCC and/or a primary secondary component carrier PSCC, the method further comprises:
measuring, by the terminal device, all neighboring cells in an MO of the primary component carrier PCC and/or an MO of the primary secondary component carrier PSCC.

16. A measurement method, comprising:

receiving, by a terminal device, a measurement configuration and a conditional configuration, wherein the measurement configuration is used to configure a plurality of measurement objects MOs, the plurality of MOs comprise a first-type MO, the first-type MO comprises an MO corresponding to conditional handover CHO and/or an MO corresponding to conditional PSCell addition/change CPAC, and the conditional configuration is used to configure at least one conditional event for triggering conditional handover CHO and/or conditional PSCell addition/change CPAC; and
when the conditional event comprises a time-based conditional event or a location-based conditional event, and an applicable cell corresponding to the conditional configuration meets the time-based conditional event or the location-based conditional event, measuring, by the terminal device, only a target MO in the first-type MO, wherein the target MO is an MO in the first-type MO comprising the applicable cell corresponding to the conditional configuration.

17. The method according to claim 16, wherein the target MO is associated with a plurality of synchronization signal block measurement timing configuration SMTC windows; and
the measuring, by the terminal device, only a target MO in the first-type MO comprises:
measuring, by the terminal device, the target MO only in a first SMTC window, wherein the first SMTC window is an SMTC window in which the applicable cell corresponding to the conditional configuration is located.

18. The method according to claim 16 or 17, wherein the plurality of MOs are MOs in a non-terrestrial network NTN.

19. A communication apparatus, comprising a processor and a memory, wherein

the memory stores a computer program; and
the processor invokes the computer program, so that the communication apparatus is enabled to perform the method according to any one of claims 1 to 8, the method according to any one of claims 13 to 15, or the method according to any one of claims 16 to 18.

20. A communication apparatus, comprising a processor and a memory, wherein

the memory stores a computer program; and

the processor invokes the computer program, so that the communication apparatus is enabled to perform the method according to any one of claims 9 to 12.

21. A communication system, comprising:
a network device that performs the method according to any one of claims 9 to 12, and a terminal device that performs the method according to any one of claims 1 to 8, 13 to 15, and 16 to 18.

22. A computer-readable storage medium, storing instructions, wherein when the instructions are run on a computer, the computer is enabled to perform the method according to any one of claims 1 to 8, 13 to 15, and 16 to 18, or the method according to any one of claims 9 to 12.

23. A computer program product comprising instructions, wherein when the computer program product runs on a computer, the computer is enabled to perform the method according to any one of claims 1 to 8, 13 to 15, and 16 to 18, or the method according to any one of claims 9 to 12.

| Terminal device | | Network device |
| --- | --- | --- |

101: Send a measurement configuration

102: When the measurement configuration includes first indication information, the terminal device determines a measurement parameter of a first group of MOs and a measurement parameter of a second group of MOs

103: Measure the first group of MOs based on the measurement parameter of the first group of MOs, and measure the second group of MOs based on the measurement parameter of the second group of MOs

FIG. 1

Terminal device

Network device

201: Send a measurement configuration

202: If an applicable cell corresponding to a conditional configuration in a first-type MO that operates on a same frequency as a serving cell is a neighboring cell, measure the applicable cell corresponding to the conditional configuration in the first-type MO that operates on a same frequency as the serving cell

203a: When a frequency band in which the first-type MO that operates on a same frequency as the serving cell is located does not include a primary component carrier PCC and a primary secondary component carrier PSCC, measure all neighboring cells in one of the at least one first-type MO that operates on a same frequency as the serving cell

203b: When a frequency band in which the first-type MO that operates on a same frequency as the serving cell is located includes a primary carrier PCC and/or a primary secondary component carrier PSCC, measure all neighboring cells in an MO of the primary component carrier PCC and/or an MO of the primary secondary component carrier PSCC

FIG. 2

Terminal device

Network device

301: Send a measurement configuration and a
conditional configuration

302: When a conditional event includes a time-based
conditional event or a location-based conditional event, and
an applicable cell corresponding to a conditional
configuration meets the time-based conditional event or the
location-based conditional event, measure a target MO in a
first-type MO, where the target MO is an MO in the first-
type MO including the applicable cell corresponding to the
conditional configuration

FIG. 3

40

Communication apparatus        403        404

401                              Transceiver

Processor                         Tx

402

Memory                            Rx

406                              405

Output device                Input device

FIG. 4

50

Communication apparatus

504

503

Transceiver

Tx

Processor

501

502

Rx

Memory

Network interface

505

FIG. 5

60

Communication apparatus

601

602

Transceiver module

Processing module

FIG. 6

70

Communication apparatus

701

702

Transceiver module

Processing module

FIG. 7

**EP 4 408 070 A1**

## INTERNATIONAL SEARCH REPORT

International application No.

**PCT/CN2022/119837**

### A. CLASSIFICATION OF SUBJECT MATTER

H04W 36/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI; EPODOC; CNPAT; CNKI; 3GPP: coexistence, gap, shar+, type, MO+, measurement object+, NTN, CHO, CPAC, normal, handover, factor, group, robustness, conditional HO, Intra-frequency, conditional handover, normal ho, location, time, 测量配置, 常规, 普通, 传统, 正常, 位置, 非CHO, 条件, 同频, 频率内, 测量对象, 时间, 优先, 触发, 邻, 类型

### C. DOCUMENTS CONSIDERED TO BE RELEVANT

| Category* | Citation of document, with indication, where appropriate, of the relevant passages | Relevant to claim No. |
|---|---|---|
| X | WO 2021003715 A1 (GUANGDONG OPPO MOBILE TELECOMMUNICATIONS CORP., LTD.) 14 January 2021 (2021-01-14)<br>description, page 3, line 15 to page 14, line 12 | 1-15, 19-23 |
| Y | WO 2021003715 A1 (GUANGDONG OPPO MOBILE TELECOMMUNICATIONS CORP., LTD.) 14 January 2021 (2021-01-14)<br>description, page 3, line 15 to page 14, line 12 | 16-19, 21-23 |
| Y | VIVO. "R2-2107447 Discussion on CHO Related Aspects for NTN"<br>*3GPP TSG-RAN WG2 Meeting #115 electronic,* 27 August 2021 (2021-08-27),<br>sections 1 and 2 | 16-19, 21-23 |
| Y | ZTE CORPORATION et al. "R2-2104065 Further Consideration on CHO in NTN"<br>*3GPP TSG-RAN WG2 Meeting#113bis-e,* 20 April 2021 (2021-04-20),<br>sections 1 and 2 | 16-19, 21-23 |
| A | MEDIATEK INC. "R2-1903240 Discussions on Conditional Handover Procedures"<br>*3GPP TSG-RAN WG2 Meeting #105bis,* 12 April 2019 (2019-04-12),<br>entire document | 1-23 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 December 2022** | **15 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/119837**

| Patent document cited in search report | | | Publication date (day/month/year) | Patent family member(s) | | | Publication date (day/month/year) |
|---|---|---|---|---|---|---|---|
| WO | 2021003715 | A1 | 14 January 2021 | BR | 112021026475 | A2 | 08 February 2022 |
| | | | | EP | 3930380 | A1 | 29 December 2021 |
| | | | | JP | 2022543525 | A | 13 October 2022 |
| | | | | US | 2022007244 | A1 | 06 January 2022 |
| | | | | KR | 20220030936 | A | 11 March 2022 |
| | | | | CN | 112868251 | A | 28 May 2021 |
| | | | | CN | 113329420 | A | 31 August 2021 |
| | | | | IN | 202117042678 | A | 31 December 2021 |
| | | | | VN | 84977 | A | 25 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111228800